# EUROPEAN PATENT SPECIFICATION

(11) **EP 3 155 037 B1**
(45) Date of publication and mention of the grant of the patent: **24.07.2019**
(21) Application number: 15797402.3
(22) Date of filing: 08.06.2015
(51) Int. Cl.: C08J 7/16, C08J 7/18, C08K 5/3492

(54) **ORGANIC RESIN LAMINATE**
ORGANISCHES HARZLAMINAT
STRATIFIÉ EN RÉSINE ORGANIQUE

(30) Priority: 12.06.2014 US 201462011336 P
(43) Date of publication of application: 19.04.2017
(73) Proprietor: Exatec, LLC., Wixom, MI 48393 (US); SHIN-ETSU CHEMICAL CO., LTD, Tokyo 100-0004 (JP)
(72) Inventor: HIGUCHI, Koichi, Annaka-shi Gunma 379-0224 (JP); GASWORTH, Steven Marc, Wixom, Michigan 48393 (US)
(74) Representative: Sabic Intellectual Property Group
(86) International application number: PCT/IB2015/054332
(87) International publication number: WO 2015/189762

(56) References cited:
- EP-A1- 1 995 056
- EP-A1- 2 492 081
- WO-A1-2013/032421

## Description

### TECHNICAL FIELD

This application relates to organic resin laminates having weather resistance and abrasion resistance.

### BACKGROUND ART

Because of many advantages including impact resistance, light weight and workability, organic resin substrates are used in a variety of applications. In particular, recent efforts are devoted to increasing the surface hardness and abrasion resistance of organic resins so that molded organic resins may be applicable to the windows in various vehicles. However, molded organic resins or generally, molded plastic materials have poor surface properties such as abrasion resistance and weather resistance as compared with glass. It is thus attempted to improve their surface properties.

What is needed in the art is an organic resin laminate having improved abrasion resistance, adhesion, and/or weather resistance.

### SUMMARY

Disclosed herein are methods of making an organic laminate, as well as the laminate made therefrom.

An embodiment of a method of making an organic resin laminate can comprise: applying a wet coating to an organic resin substrate to form to form an intermediate layer (II) on the substrate, wherein the wet coating comprises a multi-functional (meth)acrylate, a photopolymerization initiator, and a reactive UV absorber having the general formula (1): 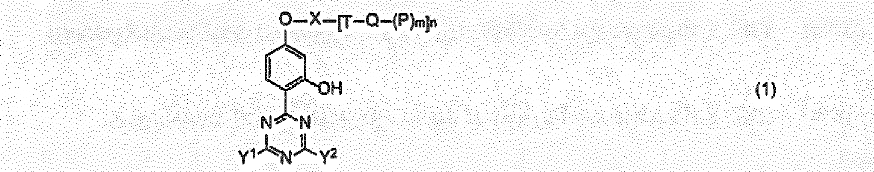 wherein Y¹ and Y² can be each independently a substituent group of the general formula (2): 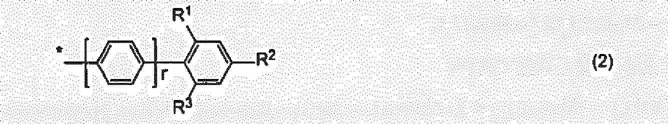 wherein * stands for a bonding site, r is 0 or 1, R¹, R² and R³ are each independently selected from the group consisting of hydrogen, hydroxyl, C₁-C₂₀ alkyl, C₄₋C₁₂ cycloalkyl, C₂-C₂₀ alkenyl, C₁-C₂₀ alkoxy, C₄-C₁₂ cycloalkoxy, C₂-C₂₀ alkenyloxy, C₇-C₂₀ aralkyl, halogen,-C≡N, C₁-C₅ haloalkyl, -SO₂R', -SO₃H, -SO₃M (M = alkali metal), -COOR', -CONHR',-CONR'R", -OCOOR', -OCOR', -OCONHR', (meth)acrylamino, (meth)acryloxy, optionally substituted C₆-C₁₂ aryl and optionally substituted C₃-C₁₂ heteroaryl, wherein R' and R" are each independently hydrogen, C₁-C₂₀ alkyl, C₄-C₁₂ cycloalkyl, optionally substituted C₆-C₁₂ aryl or optionally substituted C₃-C₁₂ heteroaryl; X is a di-, tri- or tetravalent, linear or branched, saturated hydrocarbon residue which may be separated by at least one element of oxygen, nitrogen, sulfur, and phosphor; T is a urethane group -O-(C=O)-NH-; Q is a di- or trivalent, linear or branched, saturated hydrocarbon residue which may be separated by at least one element of oxygen, nitrogen, sulfur, and phosphor; P is (meth)acryloxy; and m is 1 or 2, and n is an integer of 1 to 3, with the proviso that m and n are not equal to 1 at the same time; UV curing the wet coating to form a cured coating; and depositing a first plasma coating on the cured coating, wherein the first plasma coating is deposited using a first oxygen flow rate of less than 250 sccm per plasma source.

An embodiment of an organic resin laminate can comprise: an organic resin substrate and a multilayer coating system on a surface of the substrate, said multilayer coating system including a plasma layer formed from polymerization of an organosilicon compound; and an intermediate layer (II) which is a UV cured coating of a reactive UV absorber, a multi-functional (meth)acrylate, and a photopolymerization initiator; wherein the laminate has a Young's Modulus of greater than or equal to 3 GPa as determined by nanoindentation with a maximum load of 1 mN.

### BRIEF DESCRIPTION OF DRAWINGS

FIG. 1 is a diagram showing the GPC charts of the compound obtained in Synthesis Example 1 and its reactant.
FIG. 2 illustrates the ¹H-NMR chart of the compound obtained in Synthesis Example 1.
FIG. 3 illustrates the IR chart of the compound obtained in Synthesis Example 1.
FIG. 4 is a diagram showing the oxygen permeability charts of the laminates obtained in Example 8.

### DETAILED DESCRIPTION

Recently, it is desired to further improve surface properties of molded organic resins. In the automotive field, for example, a high level of abrasion resistance is desired for the purposes of preventing the windshield from scratching or abrading upon wiper operation and side windows from scratching or abrading upon moving up-and-down operation. Potential service in a very high temperature and/or humidity environment must also be taken into account. Examples of molded organic resins with improved surface properties can be found in European patent publications EP2492081 and EP1995056, and in the international patent publication WO2013/032421.

For improvements in surface properties, a thin film of silicon dioxide or the like can be deposited on a cured layer of wet resin system to achieve the abrasion resistance desired for the automotive windows. Coatings obtained from such a dry coating system achieve improvements in abrasion resistance over the aforementioned wet coating system.

Expanding thermal plasma (ETP) processes have been used to deposit the dry coatings at high deposition rates. Among other things, the plasma process is suited for coating abrasion resistant coatings in large scale and on large area parts (see, for example, USP 6,110,544, USP 6,948,448, and USP 6,397,776).

The lamination technology that is arrived at by combining the wet coating process with the dry coating process is found insufficient to prevent organic resin substrates from degradation or discoloration in long-term outdoor exposure tests and accelerated weathering tests. Such problems can be overcome by incorporating UV absorbers in wet coating layers for blocking UV. Specifically, while these laminate structures comprise an organic resin substrate, a primer layer of an acrylic base coating composition on a surface of the substrate, a silicone hard coat layer formed thereon from a silicone hard coating composition, and a hard silicon oxide layer deposited thereon by a plasma-enhanced CVD process, organic or inorganic UV absorbers can be blended in the primer layer and silicone coat layer. In general, the primer layer and the silicone hard coat layer use the step of heat drying at 120°C for about one hour after the coating step. Although this technology is successful in imparting a high level of abrasion resistance and long-term weather resistance, a plurality of heating steps are used. From the aspects of shorter manufacture time, increased yield, and eventual cost saving, it is desirable to simplify the technology.

For the simplification of the wet process, application of a photo-cure system is contemplated. Specifically, a coating composition comprising a multifunctional (meth)acrylate compound and a photo-polymerization initiator is coated on a surface of an organic resin substrate, radiation is irradiated to the composition to form a coating which is cross-linked as a result of photo-polymerization of (meth)acrylic groups induced upon radiation exposure, and an oxide layer is formed on the coating by the dry process. The photo-curable (meth)acrylic coating composition can be coated and cured to the resin substrate directly without a need for the primer which is essential for the above silicone hardcoat composition. This technology is successful in process simplification, but is still unsatisfactory with respect to long-term weather resistance.

There is not currently available a method for manufacturing a laminate which meets all requirements including visible light transparency, UV shielding property, and sufficient weather resistance and durability to withstand prolonged outdoor exposure while maintaining a very high level of abrasion resistance equivalent to glass, via the simple step of interposing one wet photo-curable coating between layers.

An embodiment of an organic resin laminate can comprise an organic resin substrate and a multilayer coating system on one surface of the substrate, which exhibits abrasion resistance and weather resistance. The multilayer coating system can include a plasma layer in the form of a coating obtained from plasma polymerization of an organosilicon compound, and an intermediate layer (II) in the form of a cured coating of a wet coating composition. The intermediate layer (II) has a pair of opposed surfaces, with one surface being disposed contiguous to the plasma layer and the other surface being disposed contiguous to the organic resin substrate. The wet coating composition comprises (A) a reactive UV absorber of formula (1) defined below, (B) a multi-functional (meth)acrylate, and (C) a photopolymerization initiator.

This and other embodiments will be described below in detail.

An embodiment can include an organic resin laminate that comprises a substrate, such as a molded substrate of polycarbonate resin, and a multilayer coating system on the substrate. The multilayer coating system can include an intermediate layer (II) in the form of a cured coating containing a specific reactive UV absorber, and a plasma layer in the form of a coating obtained from plasma polymerization of an organosilicon compound, typically a silicon oxide coating formed by the plasma-enhanced chemical vapor deposition (PECVD) method, which layers can be deposited on the substrate in the described order. The laminate enables replacement of a system involving 5 layers (i.e., organic resin substrate, cured primer layer, cured silicone layer, and abrasion resistant layer (comprising 2 sublayers)) to be replaced by a new simple system involving 4 layers (i.e., organic resin substrate, intermediate layer (II), and plasma layer as abrasion resistant layer (comprising 2 sublayers)). Any of the five layer laminate, or the laminate disclosed herein, can also comprise other layers, such as an ink layer. Furthermore, the present laminate possesses visible light transmitting and UV blocking abilities because a specific UV absorber is contained in the intermediate layer (II), and maintains weather resistance over a long term because the UV absorber is fixed in the layer by reacting with a binder, i.e., the UV absorber is prevented from bleeding out of the intermediate layer. The laminate is suited for use as windows, for example, windows and windshields in transportation vehicles such as automobiles and aircraft, windows in buildings, and noise barriers along roadways.

### Plasma layer

The plasma layer can be a coating (e.g., a hard coating) containing silicon, oxygen, carbon and hydrogen, formed by plasma polymerization of an organosilicon compound. More particularly, the hard coating may be formed and stacked by the expanding thermal plasma process. With respect to the expanding thermal plasma technology, reference may be made to JP-A 2009-540124, JP-A 2009-502569, USP 7,163,749, USP 7,056,584, and USP 6,426,125.

The outermost layer can be deposited using a plasma deposition process (e.g., a low pressure, expanding thermal plasma deposition process). In the expanding thermal plasma process, plasma is generated by ionizing a noble gas such as Ar or He through a direct current (DC) arc generator. The plasma expands in a chamber, typically a low-pressure chamber, where vaporized organosilicon compound is injected. Plasma species react with the organosilicon compound gas to create dissociated molecules, which are precursors of the deposited film. Optionally oxidizing gas is admitted into the chamber so that it may react with the dissociated reactant molecules.

Examples of the organosilicon compound which is used to form the plasma layer by the plasma process include, but are not limited to, tetramethoxysilane, tetraethoxysilane, trimethoxysilane, methyltrimethoxysilane, methoxytrimethylsilane, methyl triethoxysilane, hexamethyldisiloxane, 1,1,3,3-tetramethyldisiloxane, 1,1,3,3,5,5-hexamethyltrisiloxane, octamethyltrisiloxane, hexamethylcyclotrisiloxane, octamethylcyclotetrasiloxane, and 1,3,5,7-tetramethylcyclotetrasiloxane. Octamethylcyclotetrasiloxane is particularly desirable.

The coating chamber is adapted for a continuous, two-side coating process including a heating station and two coating stations for depositing an inner sub-layer and an outer sub-layer. The coating station can include an array of DC plasma arc generators, e.g., in two rows (for example, vertical arrays on opposite sides of the substrate) for coating the entire window surface. The deposition rate can be in a range of 100 nanometers/minute (nm/min) to 20,000 nm/min. The number of plasma arc generators in a row can be scaled up to completely coat large area substrates, typically windows.

The plasma layer may include an inner sub-layer (also referred to as first plasma coating) and an outer sub-layer (also referred to as second plasma coating). If necessary, properties of the sub-layers may be adjusted so as to provide the coating layer with adhesion to the intermediate layer (II) and to impart abrasion resistance to the coating layer. In the method of manufacturing the laminate, the resin substrate may be heated to a temperature above the ambient temperature in order to achieve adhesion to the inner sub-layer. Specifically, the substrate may be heated to a surface temperature of 35 to 100°C prior to the plasma deposition.

In an embodiment, the inner sub-layer contains a higher proportion of organic functional groups than the outer sub-layer, for example, for the purpose of enhancing adhesion. Desirably, the first plasma coating was deposited using a first oxygen flow rate of less than or equal to 100 sccm per plasma source, specifically, less than or equal to 50 sccm per plasma source, and even more specifically less than or equal to 10 sccm per plasma source, and still more specifically, no oxygen flow or an oxygen flow rate of 0 sccm (in other words, no oxygen is intentionally introduced in to the coating chamber). Desirably, the second plasma coating was deposited using a second oxygen flow rate of greater than or equal to 250 sccm per plasma source, specifically, greater than or equal to 400 sccm per plasma source, and even more specifically greater than or equal to 800 sccm per plasma source. Desirably, the plasma layer has a Young's Modulus of greater than or equal to 3 GigaPascals (GPa), specifically, 3 GPa to 40 GPa, and more specifically 3 GPa to 15 GPa, as determined by nanoindentation with a maximum load of 1 mN

The plasma layer can have a total thickness in the range of 2.5 to 5.0 micrometers (µm), and more specifically 2.5 to 4.0 µm.

### Intermediate layer II

The intermediate layer (II) can comprise a coating composition comprising (A) a specific reactive UV absorber, (B) a multi-functional (meth)acrylate, and (C) a photopolymerization initiator. 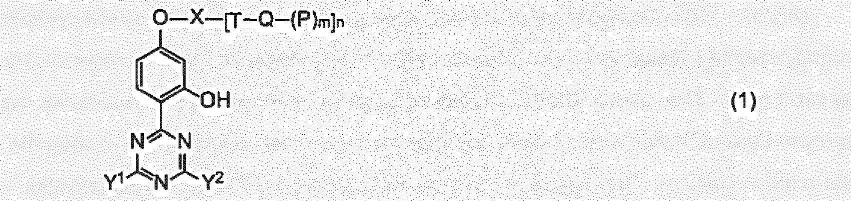 In formula (1), Y¹ and Y² can each independently be a substituent group of the general formula (2). 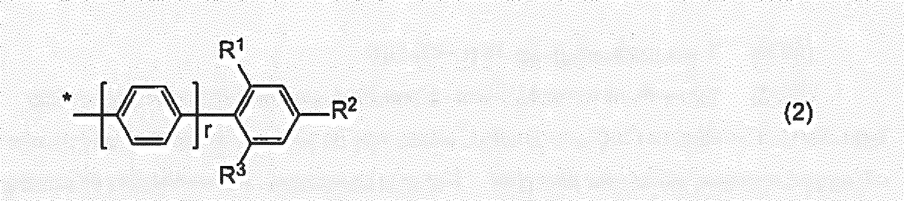 Herein the asterisk (*) stands for a bonding site, and r is 0 or 1, desirably 1. It is believed that in case of r=1, the radical created upon absorption of UV is stabilized because its conjugated system is expanded.

R¹, R² and R³ can each independently be hydrogen, hydroxyl, C₁-C₂₀ alkyl, C₄-C₁₂ cycloalkyl, C₂-C₂₀ alkenyl, C₁-C₂₀ alkoxy, C₄-C₁₂ cycloalkoxy, C₂-C₂₀ alkenyloxy, C₇-C₂₀ aralkyl, halogen, -C≡N, C₁-C₅ haloalkyl, -SO₂R', -SO₃H, -SO₃M (M = alkali metal), -COOR', -CONHR', -CONR'R", -OCOOR', -OCOR', -OCONHR', (meth)acrylamino, (meth)acryloxy, C₆-C₁₂ aryl (optionally substituted with halogen or the like), or C₃-C₁₂ heteroaryl (optionally substituted with halogen or the like). Of these, hydrogen, hydroxyl, C₁-C₂₀ alkyl, C₁-C₂₀ alkoxy, halogen, and C₆-C₁₂ aryl are desirable, and hydrogen and C₁-C₂₀ alkyl are most desirable. R' and R" can each independently be hydrogen, C₁-C₂₀ alkyl, C₄-C₁₂ cycloalkyl, C₆-C₁₂ aryl (optionally substituted with halogen or the like) or C₃-C₁₂ heteroaryl (optionally substituted with halogen or the like). Of these, hydrogen, C₁-C₂₀ alkyl, and C₆-C₁₂ aryl are desirable, and hydrogen and C₁-C₂₀ alkyl are most desirable.

X can be a di-, tri- or tetravalent, linear or branched, saturated hydrocarbon residue, typically C₁-C₂₀ alkyl or C₄-C₁₂ cycloalkyl, which may be separated by at least one element of oxygen, nitrogen, sulfur, and phosphor. For ease of synthesis and availability of starting reactants, X is desirably a group having the general formula (3) or (4). 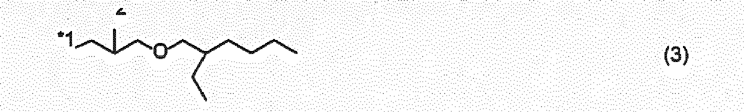 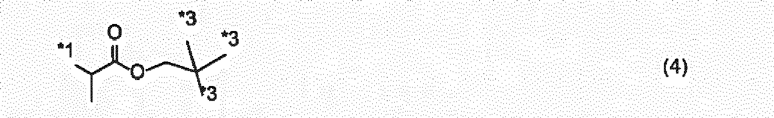 Herein *1 bonds to the oxygen in formula (1), *2 bonds to T in formula (1), *3 each independently is hydrogen or bonds to T in formula (1) directly or via a divalent, linear or branched, saturated hydrocarbon group which may be separated by at least one element of oxygen, nitrogen, sulfur, and phosphor, at least one *3 bonds to T directly or via a divalent, linear or branched, saturated hydrocarbon group which may be separated by at least one element of oxygen, nitrogen, sulfur, and phosphor.

T is a urethane group -O-(C=O)-NH-.

Q is a di- or trivalent, linear or branched, saturated hydrocarbon residue, typically C₁-C₂₀ alkyl or C₄-C₁₂ cycloalkyl, which may be separated by at least one element of oxygen, nitrogen, sulfur, and phosphor. For ease of synthesis and availability of starting reactants, Q is desirably a group having the general formula (5) or (6). 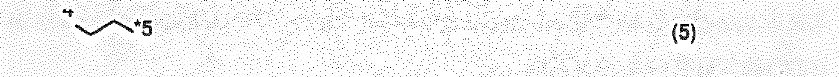 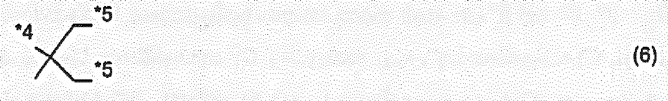 Herein *4 bonds to T in formula (1), and *5 bonds to P in formula (1).

P is (meth)acryloxy, specifically a (meth)acryloxy group having the general formula (11): 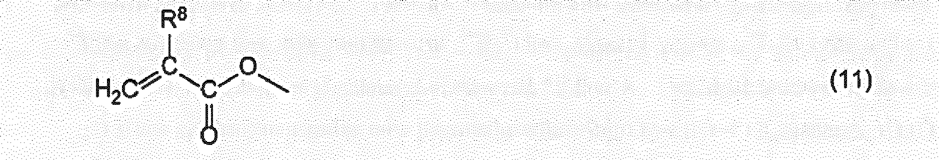 wherein R⁸ is hydrogen or methyl.

The subscript m is 1 or 2, and n is an integer of 1 to 3, with the proviso that m and n are not equal to 1 at the same time. Desirably m is 2 and n is 1.

Shown below are those examples of the reactive UV absorber (A) which are desirable from the aspects of availability of starting reactants, compatibility with relatively highly polar binder precursors such as multifunctional (meth)acrylates, and photo-curability.

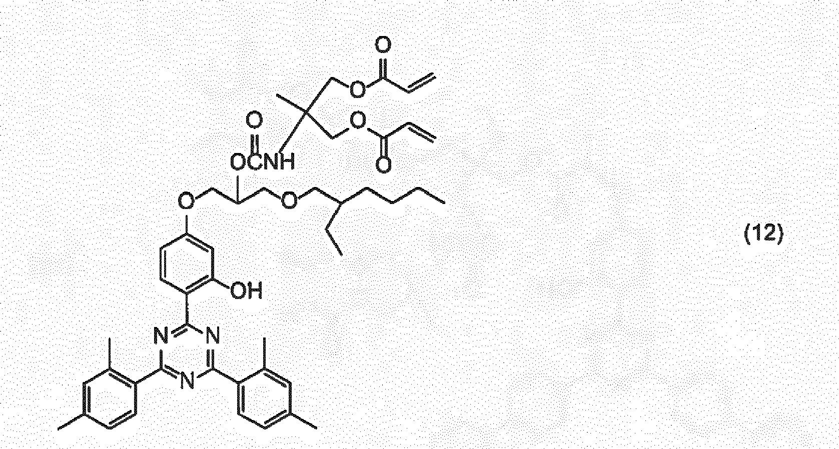

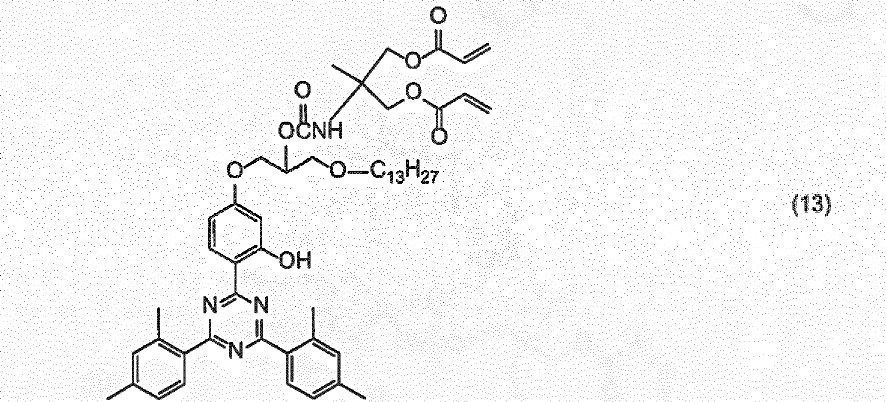

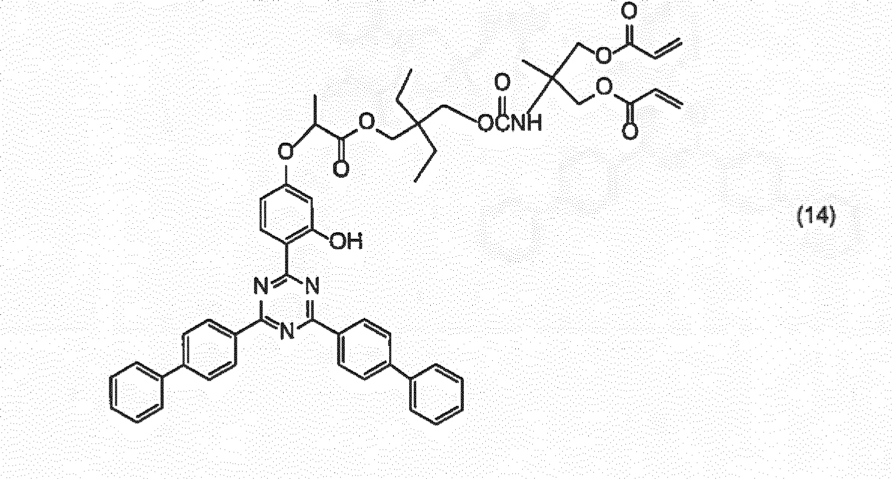

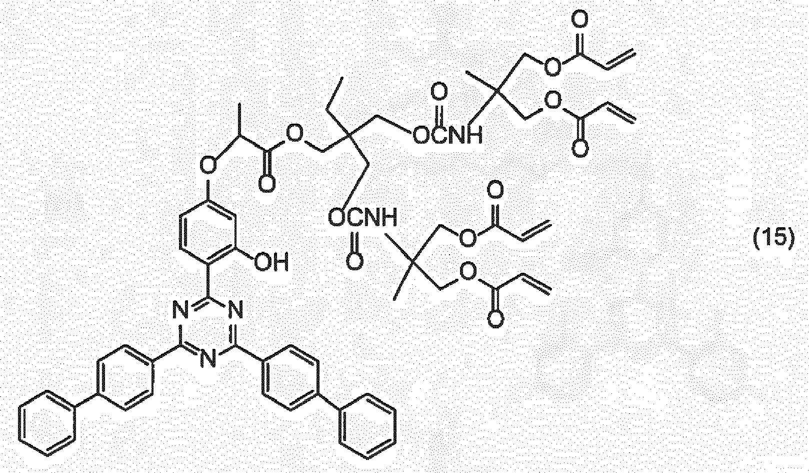

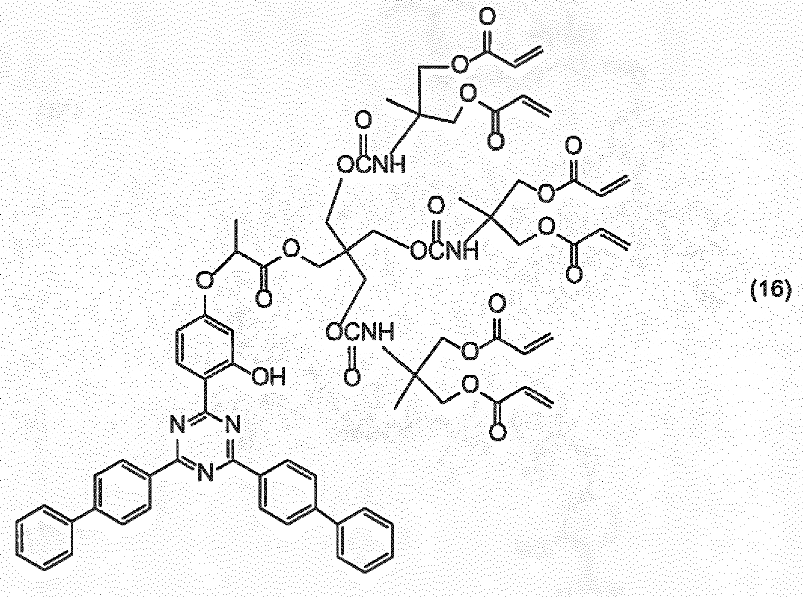

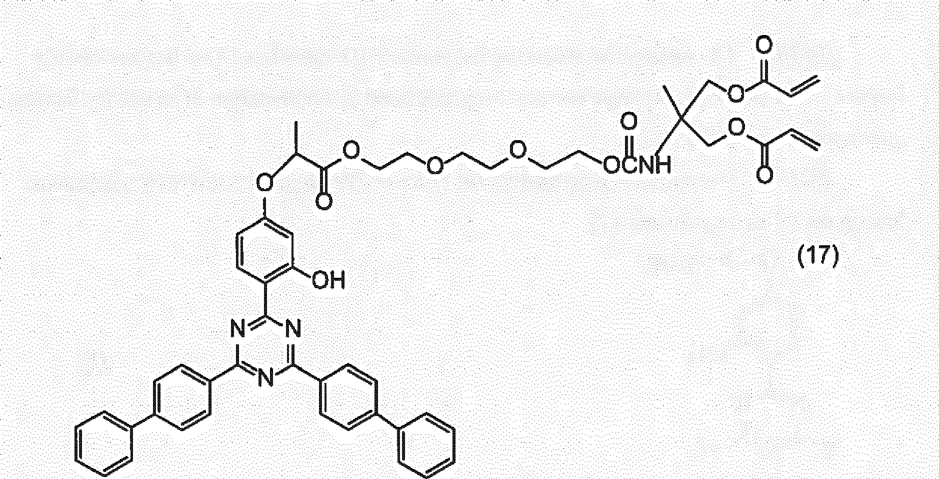

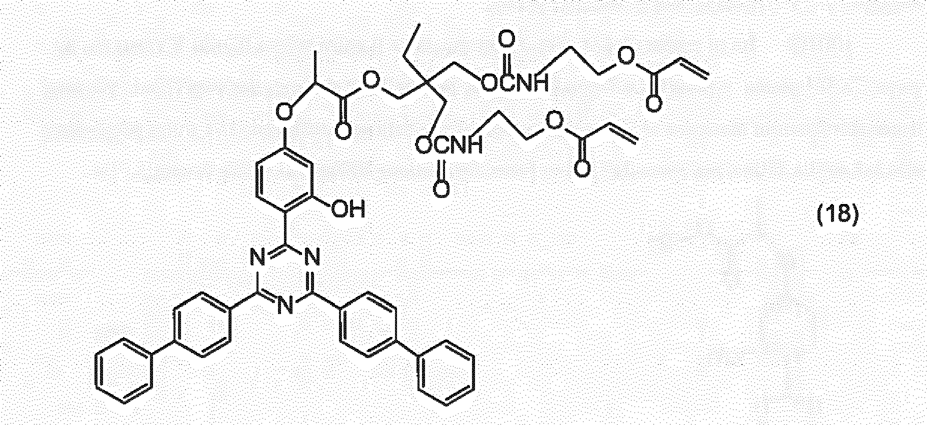

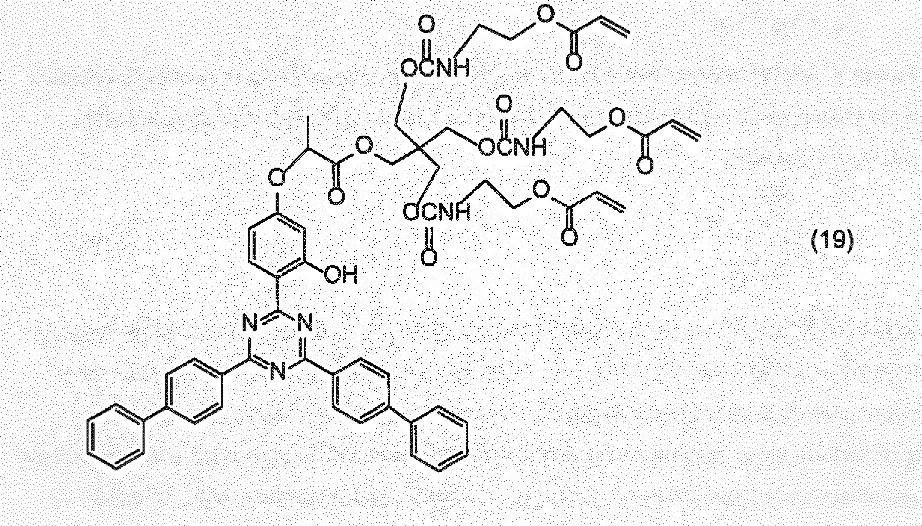

The method for preparing the reactive UV absorber (A) is not particularly limited. For example, the absorber may be synthesized by combination of transesterification and urethanating reactions.

One method for preparing the reactive UV absorber starts with a precursor having the following formula (7): 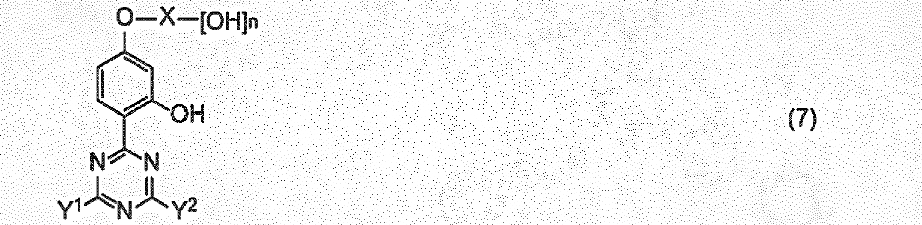 wherein Y¹, Y², X and n are as defined above.

In an embodiment, those precursors of formula (7) wherein X contains an ester (COO) group, typically of formula (4), can be obtained through the step (i) of effecting transesterification between an ester compound of the following formula (9) and a polyhydric alcohol of the following formula (10) to form a precursor of the following formula (7a). 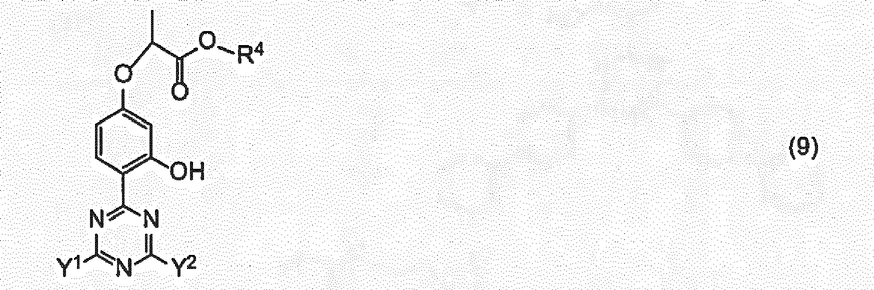 Herein Y¹ and Y² are as defined above, and R⁴ is a monovalent, linear or branched, saturated hydrocarbon group which may be separated by at least one element of oxygen, nitrogen, sulfur, and phosphor. 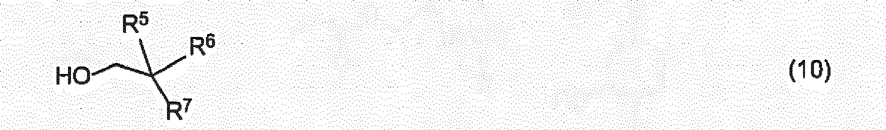 Herein R⁵, R⁶ and R⁷ can each independently be hydrogen, hydroxyl, a monovalent, linear or branched, saturated hydrocarbon group which may be separated by at least one element of oxygen, nitrogen, sulfur, and phosphor, or a monovalent, linear or branched, saturated hydrocarbon group which is terminated with hydroxyl and which may be separated by at least one element of oxygen, nitrogen, sulfur, and phosphor, and at least one of R⁵, R⁶ and R⁷ is hydroxyl or a monovalent, linear or branched, saturated hydrocarbon group which is terminated with hydroxyl and which may be separated by at least one element of oxygen, nitrogen, sulfur, and phosphor. 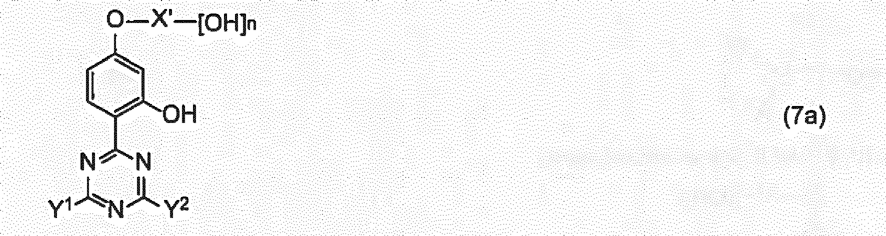 Herein Y¹, Y² and n are as defined above, and X' is a di-, tri- or tetravalent, linear or branched, saturated hydrocarbon residue which contains an ester group and which may be separated by at least one element of oxygen, nitrogen, sulfur, and phosphor, typically a group of formula (4).

The target compound of formula (1) is prepared through the step (ii) of reacting the precursor of formula (7) with a compound having the following formula (8), specifically reacting a hydroxyl group bonded to X in the precursor of formula (7) with an isocyanate group in the compound of formula (8).

OCN-Q-(P)ₘ (8)

Herein Q, P and m are as defined above.

### Step (i)

Where precursors of formula (7) are known compounds, typically those precursors of formula (7) wherein X is a group of formula (3), they may be prepared by any well-known methods.

Those precursors of formula (7) wherein X contains an ester (COO) group, typically of formula (4), can be obtained through the step (i) of effecting transesterification between an ester compound of the following formula (9) and a polyhydric alcohol of the following formula (10) to form a precursor of the following formula (7a). 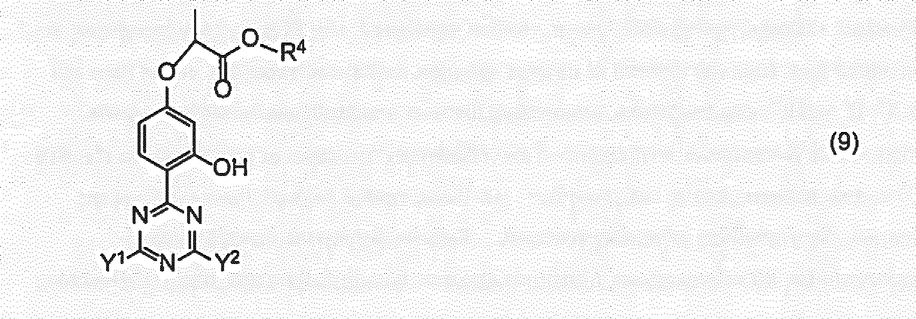 Herein Y¹ and Y² are as defined above, and R⁴ is a monovalent, linear or branched, saturated hydrocarbon group which may be separated by at least one element of oxygen, nitrogen, sulfur, and phosphor. 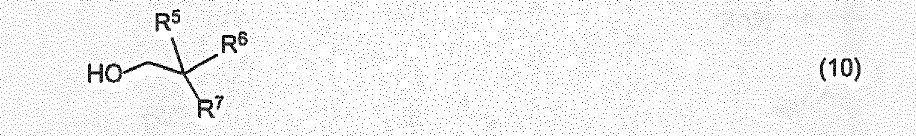 Herein R⁵, R⁶ and R⁷ are as defined above. 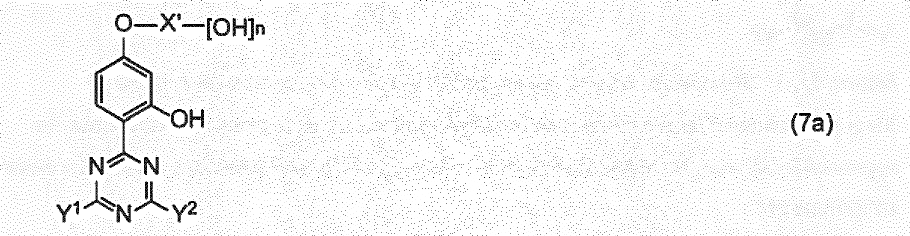 Herein Y¹, Y² and n are as defined above, and X' is a di-, tri- or tetravalent, linear or branched, saturated hydrocarbon residue which contains an ester group and which may be separated by at least one element of oxygen, nitrogen, sulfur, and phosphor, typically a group of formula (4).

In formula (9), R⁴ is a monovalent, linear or branched, saturated hydrocarbon group of 1 to 25 carbon atoms which may be separated by at least one element of oxygen, nitrogen, sulfur, and phosphor. Examples include methyl, ethyl, n-propyl, isopropyl, n-butyl, isobutyl, sec-butyl, tert-butyl, n-pentyl, isopentyl, neopentyl, tert-pentyl, n-hexyl, isohexyl, cyclohexyl, n-heptyl, isoheptyl, n-octyl, 2-ethylhexyl, n-nonyl, n-decyl, n-undecyl, and n-dodecyl. Of these, n-octyl is desirable for availability of starting reactants.

The ester compound of formula (9) is commercially available, for example, under the trade name of Tinuvin 479 from BASF.

In formula (10), R⁵, R⁶ and R⁷ can independently be hydrogen, hydroxyl, a monovalent, linear or branched, saturated hydrocarbon group which may be separated by at least one element of oxygen, nitrogen, sulfur, and phosphor, or a monovalent, linear or branched, saturated hydrocarbon group which is terminated with hydroxyl and which may be separated by at least one element of oxygen, nitrogen, sulfur, and phosphor, and at least one of R⁵, R⁶ and R⁷ is hydroxyl or a monovalent, linear or branched, saturated hydrocarbon group which is terminated with hydroxyl and which may be separated by at least one element of oxygen, nitrogen, sulfur, and phosphor. Of these, methyl, hydroxyl and methylol are desirable for availability of starting reactants. Suitable polyhydric alcohols include pentaerythritol, trimethylolethane, trimethylolpropane, dimethylolpropane, dimethylolbutane, dimethylolpentane, diethylene glocyol, and triethylene glycol, with pentaerythritol and trimethylolpropane being desirable for availability of starting reactants.

In formula (7a), X' is a di-, tri- or tetravalent, linear or branched, saturated hydrocarbon residue which may be separated by at least one element of oxygen, nitrogen, sulfur, and phosphor, specifically an ester-containing group having a residue derived from the compound of formula (10).

In step (i), the reaction of compounds (9) and (10) can be effected at a temperature of 10 to 200°C, desirably at 20 to 180°C. At temperatures below 10°C, the reaction takes a longer time which is undesirable from the aspect of productivity. Temperatures above 200°C may promote side reactions to form more by-products and sometimes cause the product to be colored.

In step (i), a catalyst may be used to promote the reaction. Any well-known catalysts commonly used in transesterification may be used. For example, tin-based catalysts can be used. The catalyst can be used in an amount of 0 to 5% by weight, specifically, greater than 0 to 5% by weight, and more specifically, 1,000 ppm to 3% by weight based on the total weight of the compounds (9) and (10). More than 5% by weight of the catalyst tends to form by-products and cause the product to be colored.

In the practice of reaction, the compounds (9) and (10) can be used in equimolar amounts although the amounts are not limited thereto.

A solvent may be used during the reaction of step (i). The more desirable solvent is one in which the compound of formula (9) is soluble and which is free of active hydrogen. Use of an active hydrogen-bearing solvent is undesired because by-products other than the precursor of formula (7a) can form. For the purpose of removing water from the reaction system, azeotropic dehydration or dehydration by means of molecular sieves may be carried out. Desirably, the solvent used in step (i) is the same as the solvent used in a coating composition, so that the coating composition can be prepared using the reaction product of step (ii) without a need to remove the solvent therefrom.

### Step (ii)

Step (ii) is to react a hydroxyl group bonded to X in the precursor of formula (7) with an isocyanate group in the compound of formula (8) to form the target compound of formula (1).

OCN-Q-(P)ₘ (8)

In formula (8), Q is a di- or trivalent, linear or branched, saturated hydrocarbon residue which may be separated by at least one element of oxygen, nitrogen, sulfur, and phosphor, P is (meth)acryloxy, and m is 1 or 2.

Examples of the hydrocarbon residue Q include -CH₂-, -CH₂CH₂-, -CH(CH₃)CH₂-, -(CH₂)₄-, -CH(CH₃)CH₂CH₂-, -C(CH₃)₂CH₂-, =CH-, =CHCH₂-, =C(CH₃)CH₂-, -C(CH₃)(CH₂-)₂, etc. Note that the sign "=" designates two valence bonds, but not a double bond.

Specifically, Q can be a group of formula (5) or (6). 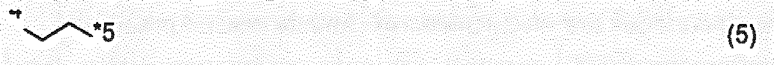 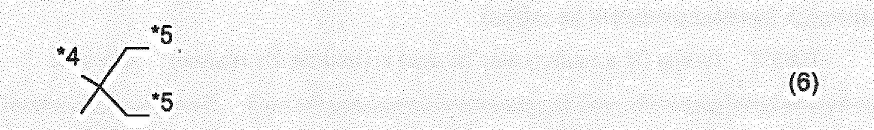 Herein *4 bonds to T in formula (1), and *5 bonds to P in formula (1).

In formula (8), P is (meth)acryloxy, specifically a (meth)acryloxy group having the general formula (11): 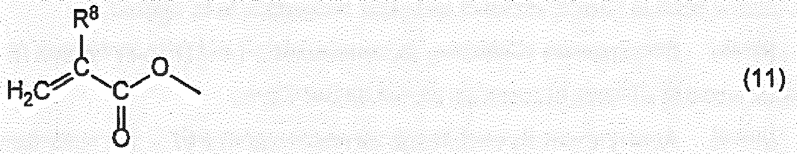 wherein R⁸ is hydrogen or methyl.

In formula (8), m is 1 or 2, desirably 2. If m exceeds 2, the corresponding compound is difficult to synthesize or not readily available. When n in formula (1) is equal to 1, m is not equal to 1. This is because if m=n=1, the resulting compound of formula (1) becomes a mono(meth)acryloxy compound, that is, monofunctional compound which is incapable of three-dimensional crosslinking, inviting an outstanding loss of abrasion resistance of the cured coating.

Examples of the compound of formula (8) include 2-acryloyloxyethyl isocyanate, 1,1-bis(acryloyloxymethyl)ethyl isocyanate, and 2-methacryloyloxyethyl isocyanate, which are commercially available under the trade name of Karenz AOI, Karenz BEI, and Karenz MOI from Showa Denko K.K.

In step (ii), the reaction of compounds (7) and (8) can be effected at a temperature of 10 to 200°C, specifically at 20 to 180°C. At temperatures below 10°C, the reaction takes a longer time which is undesirable from the aspect of productivity. Temperatures above 200°C may promote side reactions to form more by-products and sometimes cause the product to be colored.

In step (ii), a catalyst may be used to promote the reaction. Any well-known catalysts commonly used in urethanating reaction may be used, such as tin-based catalysts. The catalyst can be used in an amount of 0 to 10,000 ppm, specifically greater than 0 to 10,000 ppm, and more specifically, 100 to 5,000 ppm based on the total weight of the compounds (7) and (8). More than 10,000 ppm of the catalyst tends to form more by-products and cause the product to be colored.

In the practice of reaction, the compounds (7) and (8) can be used in equimolar amounts although the amounts are not limited thereto. The amounts may be adjusted in accordance with the number of hydroxyl groups in compound (7) which are available for reaction with the isocyanate group in compound (8). Desirably the ratio of compound (7) to compound (8) is adjusted such that no isocyanate group may be left in the reaction product. If the isocyanate group is left, a coating composition comprising the reaction product tends to lose shelf stability.

Although a hydroxyl group bonded to benzene ring is present in compound (7), this hydroxyl group does not undergo urethanating reaction with the isocyanate group in compound (8). This is probably because reaction of phenolic hydroxyl group with isocyanate group is slow, and the relevant hydroxyl group is crowded in proximity by steric hindrance. In fact, the retention of proton of phenolic hydroxyl group is confirmed by ¹H-NMR analysis after reaction.

During the urethanating reaction, a polymerization inhibitor such as p-methoxyphenol may be used in order to restrain polymerization of (meth)acryloxy groups. Polymerization may also be restrained by carrying out the reaction in an atmosphere of air or nitrogen containing 4% oxygen. These polymerization restraining means may be used in combination.

A solvent may be used during the reaction of step (ii). The desirable solvent is one in which the compound of formula (7) is soluble and which is free of active hydrogen. Use of an active hydrogen-bearing solvent is undesired because it can react with the isocyanate group in compound (8) to form a by-product. For the purpose of removing water from the reaction system, azeotropic dehydration or dehydration by means of molecular sieves may be carried out. Desirably, the solvent used in step (ii) is the same as the solvent used in a coating composition, so that the coating composition can be prepared from the reaction product of step (ii) without removing the solvent therefrom.

As described above, the coating composition comprises the reactive UV absorber (A) and the binder precursor (B). Component (A) can be used in an amount of 1 to 100 parts, specifically, 5 to 80 parts by weight per 100 parts by weight of component (B). Less than 1 part of component (A) may be insufficient for the resulting laminate to exert satisfactory weather resistance whereas more than 100 parts may detract from the abrasion resistance and substrate adhesion of the resulting laminate.

Component (B) is a multi-functional (meth)acrylate.

Examples of component (B) which can be used herein can be multifunctional (meth)acrylates having a polymerizable unsaturated bond such as, for example, urethane (meth)acrylates, epoxy (meth)acrylates, polyester (meth)acrylates, hydrolyzates and/or condensates of (mcth)acryloyloxyalkoxysilanes, and organic/inorganic hybrid (meth)acrylates obtained from hydrolytic condensation of colloidal silica and (meth)acryloyloxyalkoxysilane. A choice may be made among these in accordance with the required properties of a coating.

Various monofunctional (meth)acrylates may be added as component (B) as long as the benefits are not impaired. The monofunctional (meth)acrylates include mono-(meth)acrylates such as methyl (meth)acrylate, ethyl (meth)acrylate, butyl (meth)acrylate, propyl (meth)acrylate, n-butyl (meth)acrylate, isobutyl (meth)acrylate, t-butyl (meth)acrylate, hexyl (meth)acrylate, 2-ethylhexyl (meth)acrylate, lauryl (meth)acrylate, stearyl (meth)acrylate, morpholinyl (meth)acrylate, 2-hydroxyethyl (meth)acrylate, 2-hydroxyproyl (meth)acrylate, 4-hydroxybutyl (meth)acrylate, glycidyl (meth)acrylate, dimethylaminoethyl (meth)acrylate, diethylaminoethyl (meth)acrylate, tricyclodecane (meth)acrylate, polyethylene glycol mono(meth)acrylate, cyclohexyl (meth)acrylate, tetrahydrofurfuryl (meth)acrylate, dicyclopentanyl(meth)acrylate, dicyclopentenyl (meth)acrylate, isobornyl (meth)acrylate, allyl (meth)acrylate, 2-ethoxyethyl (meth)acrylate, benzyl (meth)acrylate, phenoxyethyl (meth)acrylate, phenyl (meth)acrylate; and mono-(meth)acrylate derivatives such as addition products of phthalic anhydride and 2-hydroxyethyl (meth)acrylate.

Examples of multifunctional (meth)acrylates include neopentyl glycol di(meth)acrylate, ethylene glycol di(meth)acrylate, polyethylene glycol (n=2-15) di(meth)acrylate, polypropylene glycol (n=2-15) di(meth)acrylate, polybutylene glycol (n=2-15) di(meth)acrylate, 2,2-bis(4-(meth)acryloxyethoxyphenyl)propane, 2,2-bis(4-(meth)acryloxydiethoxyphenyl)propane, trimethylolpropane diacrylate, bis(2-(meth)acryloxyethyl)-hydroxyethyl isocyanurate, trimethylol propane tri(meth)acrylate, tris(2-(meth)acryloxyethyl) isocyanurate, pentaerythritol tri(meth)acrylate, pentaerythritol tetra(meth)acrylate, dipentaerythritol tetra(meth)acrylate, dipentaerythritol penta(meth)acrylate, dipentaerythritol hexa(meth)acrylate; epoxy poly(meth)acrylates such as epoxy di(meth)acrylate obtained from reaction of bisphenol A diepoxy with (meth)acrylic acid; urethane poly(meth)acrylates such as urethane tri(meth)acrylate obtained from reaction of 1,6-hexamethylene diisocyanate trimer with 2-hydroxyethyl (meth)acrylate, urethane di(meth)acrylate obtained from reaction of isophorone diisocyanate with 2-hydroxypropyl (meth)acrylate, urethane hexa(meth)acrylate obtained from reaction of isophorone diisocyanate with pentaerythritol tri(meth)acrylate, urethane di(meth)acrylate obtained from reaction of dicyclohexyl diisocyanate with 2-hydroxyethyl (meth)acrylate, and urethane di(meth)acrylate obtained by reacting the urethanated reaction product of dicyclohexyl diisocyanate and polytetramethylene glycol (n=6-15) with 2-hydroxyethyl (meth)acrylate; and polyester poly(meth)acrylates such as polyester (meth)acrylate obtained from reaction of trimethylol ethane with succinic acid and (meth)acrylic acid, and polyester (meth)acrylate obtained from reaction of trimethylol propane with succinic acid, ethylene glycol and (meth)acrylic acid. It is noted that "n" used herein designates the number of recurring units in polyethylene glycol and analogues.

Also, hydrolyzates and/or condensates of (meth)acryloyloxyalkoxysilanes, and organic/inorganic hybrid (meth)acrylates obtained from hydrolytic condensation of colloidal silica and (meth)acryloyloxyalkoxysilanes are useful for improving the hardness and durability of a coating. Examples can include hydrolyzates or hydrolytic condensates of (meth)acryloyl-containing alkoxysilanes, organic/inorganic hybrid vinyl compounds and organic/inorganic hybrid (meth)acrylates, which can be obtained from (co)hydrolytic condensation of a silane (e.g., vinyltrimethoxysilane, vinyltriethoxysilane, p-styryltrimethoxysilane, 3-(meth)acrloxypropylmethyldimethoxysilane, 3-(meth)acryloxypropyltrimethoxysilane, 2-(meth)acryloxyethyltrimethoxysilane, 2-(meth)acryloxyethyltriethoxysilane, (meth)acryloxymethyltrimethoxysilane, (meth)acryloxymethyltriethoxysilane, 3-(meth)acryloxypropylmethyldiethoxysilane, 3-(meth)acryloxypropyltriethoxysilane, 8-(meth)acryloxyoctyltrimethoxysilane or 8-(meth)acryloxyoctyltriethoxysilane) alone or in admixture with another silane, optionally in the presence of colloidal silica.

If desired, a plurality of the above-exemplified compounds may be used in combination as component (B), with such a combination being desirable. In particular, combinations of one or two multifunctional (meth)acrylates with at least one of hydrolyzates or hydrolytic condensates of a (meth)acryloyl-containing alkoxysilane are desirable. Among others, combinations of two or more of hexane diol di(meth)acrylate, poly(meth)acrylate of mono- or polypentaerythritol, urethane poly(meth)acrylate having at least five radical polymerizable unsaturated double bonds per molecule, polyester poly(meth)acrylate having at least five radical polymerizable unsaturated double bonds per molecule, poly[(meth)acryloyloxyalkyl] (iso)cyanurate, (co)hydrolyzate/condensate of (meth)acryloyloxypropylalkoxysilane alone or in admixture with another silane, and organic/inorganic hybrid (meth)acrylate obtained from (co)hydrolytic condensation of colloidal silica and (meth)acrylic functionality alkoxysilane (e.g., (meth)acryloyloxypropylalkoxysilane) alone or in admixture with another silane are more desirable because coatings having improved heat resistance, chemical resistance, durability and adhesion to substrates are obtainable.

Component (C) is a photopolymerization initiator which is not particularly limited and may be selected in consideration of compatibility and curability in the photo-curable coating composition.

Examples of the initiator (C) include carbonyl compounds such as benzoin, benzoin monomethyl ether, benzoin isopropyl ether, acetoin, benzyl, benzophenone, p-methoxybenzophenone, diethoxyacetophenone, benzyl dimethyl ketal, 2,2-diethoxyaceto phenone, 1-hydroxycyclohexyl phenyl ketone, methyl phenyl glyoxylate, and 2-hydroxy-2-methyl-1-phenylpropan-1-one; sulfur compounds such as tetramethylthiuram monosulfide and tetramethylthiuram disulfide; phosphoric acid compounds such as 2,4,6-trimethylbenzoyldiphenylphosphine oxide, 2,4,6-trimethylbenzoylphenylethoxy-phosphine oxide, bis(2,4,6-trimethylbenzoyl)phenylphosphine oxide, and bis(2,6-dimethoxy benzoyl)-2,4,4-trimethylpentylphosphine oxide; 2-benzyl-2-dimethylamino-1-(4-morpholino phenyl) butanone-1 and camphorquinone. These compounds may be used alone or in admixture of two or more. Any two or more of them may be combined in accordance with the required properties of coatings.

Component (C) can be used in an amount of 0.1 to 10 parts, specifically, 1 to 8 parts by weight per 100 parts by weight of components (A) and (B) combined. With less than 0.1 part of component (C), the resulting coating may experience a noticeable drop of cure speed and losses of abrasion resistance and substrate adhesion. With more than 10 parts of component (C), a cured coating may be colored or degraded in weather resistance.

If desired, the wet coating composition of which the intermediate layer (II) is made may further contain one or more additives. Examples of additives include UV absorbers other than component (A), organic solvents, antifouling agents, water repellents, leveling agents, colorants, pigments, antioxidants, anti-yellowing agents, bluing agent, defoamers, thickeners, anti-settling agents, antistatics, surfactants, tackifiers, IR absorbers, photostabilizers, curing catalysts, and metal oxide fine particles. Desirably, the coating composition can comprise at least one additive selected from among antifouling agents, water repellents, leveling agents, colorants, pigments, tackifiers, IR absorbers, photostabilizers, curing catalysts other than the photopolymerization initiator, metal oxide fine particles other than the organic/inorganic hybrid (meth)acrylates (which may also be referred to as the colloidal silica surface treated with a (meth)acrylic functional alkoxysilane), and UV absorbers other than component (A).

Examples of the metal oxide fine particles include silica, zinc oxide, titanium oxide, cerium oxide, and combinations comprising at least one of the foregoing. From the aspect of transparency of the laminate, the metal oxide fine particles are desirably of nano size (e.g., less than 1 micrometer). Metal oxide nanoparticles may be added in an appropriate amount when it is desired to increase the hardness and abrasion resistance of the laminate or enhance the UV absorption capability thereof. Such particles have a particle size (or length) of nano (i.e., nanometer, (nm)) or submicron order, specifically up to 500 nm, more specifically 5 nm to 200 nm. Typically the nanoparticles take the form of a dispersion wherein nanoparticles are dispersed in a medium such as water or organic solvent. For example, suitable silica dispersions are commercially available as Snowtex-O, OS, OL and Methanol Silica Sol from Nissan Chemical Industries, Ltd.

Nanoparticles of zinc oxide, titanium oxide, and cerium oxide, those having minimal or no photocatalytic activity can be used. In general, oxide nanoparticles have a UV-screening function as well as a photocatalyst function. If oxide nanoparticles having high photocatalytic activity are used in a coating composition, the coating can crack due to degradation of the binder by the photocatalyst function. If nanoparticles having minimal or no photocatalytic activity are used, then cracking is restrained. The photocatalytic activity may be evaluated by measuring a change of absorbance by photodegradation of methylene blue. Specifically, 0.15 g calculated as oxide nanoparticle solid is added to 20 g of a methylene blue solution in a water/methanol weight ratio (1:1) having a methylene blue concentration of 0.01 millimole per liter (mmol/L). The solution is irradiated with black light at power of 15 watt (W) and distance of 100 millimeter (mm) from the solution to light for 12 hours. Thereafter, the solution was centrifuged at 3,000 revolutions per minute (rpm) for 15 minutes to collect the supernatant, and the absorbance of methylene blue at 653 nanometers (nm) is measured by a UV/visible spectrophotometer. A photocatalytic degradability (PD) is computed from the absorbances before and after the black light irradiation according to the following formula: PD (%) = [(A₀-A)/A₀] x 100, wherein A₀ is the initial absorbance and A is the absorbance after the irradiation. The oxide nanoparticles should have a photocatalytic degradability (PD) of less than or equal to 25%. Examples of oxide nanoparticles having a minimal photocatalyst activity include surface-coated oxide nanoparticles which can be obtained by coating surfaces of oxide nanoparticles with an oxide (e.g., silica) or hydroxide, or by surface treating with a hydrolyzable silane. Examples of the surface-coated oxide nanoparticles include those in which oxide nanoparticles are provided with an oxide coating by using an alkoxide of Al, Si, Zr or Sn and effecting hydrolysis, and those obtained by using a sodium silicate aqueous solution, and neutralizing the solution for causing oxide or hydroxide to precipitate on surfaces, and optionally, heating the precipitated oxide or hydroxide for enhancing crystallinity. Such oxide nanoparticles are commercially available as Nano-Tek™ ZNTANB 15 wt%-E16, E34, and RTTDNB 15 wt%-E68, E88 by C.I. Kasei Co., Ltd.

The nanoparticulate metal oxide may be added in an amount of 0 to 50 parts by weight and if used, specifically, greater than 0 to 50 parts by weight, and more specifically, 5 to 40 parts by weight (pbw) per 100 parts by weight as solids of components (A), (B) and (C) combined. More than 50 pbw of the metal oxide may detract from adhesion to substrates.

Where it is desired to augment the UV absorbing capability, an organic UV absorber other than component (A) may be compounded. Desirably, the UV absorber comprises organic UV absorber(s) which are compatible with the wet coating composition and have a low volatility. Low volatility, organic UV absorber(s) have a molecular weight of greater than or equal to 300 and a weight retention of at least 90% when held at 120 °C for 24 hours in an open state. Those compound derivatives whose main skeleton is hydroxy benzophenone, benzotriazole, cyanoacrylate or triazine are desirable. Also useful are polymers, such as vinyl polymers and copolymers, having these UV absorbers incorporated in a side chain, and silyl-modified organic UV absorbers and (partial) hydrolytic condensates thereof. Such additional UV absorbers include 2,4-dihydroxybenzophenone, 2,2',4,4'-tetrahydroxybenzophenone, 2-hydroxy-4-methoxybenzophenone, 2-hydroxy-4-methoxy benzophenone-5-sulfonic acid, 2-hydroxy-4-n-octoxybenzophenone, 2-hydroxy-4-n-dodecyloxybenzophenone, 2-hydroxy-4-n-benzyloxybenzophenone, 2,2'-dihydroxy-4,4'-dimethoxybenzophenone, 2,2'-dihydroxy-4,4'-diethoxybenzophenone, 2,2'-dihydroxy-4,4'-dipropoxybenzophenone, 2,2'-dihydroxy-4,4'-dibutoxybenzophenone, 2,2'-dihydroxy-4-methoxy-4'-propoxybenzophenone, 2,2'-dihydroxy-4-methoxy-4'-butoxy benzophenone, 2,3,4-trihydroxybenzophenone, 2-(2-hydroxy-5-t-methylphenyl) benzotriazole, 2-(2-hydroxy-5-t-octylphenyl)benzotriazole, 2-(2-hydroxy-3,5-di-t-butylphenyl)benzotriazole, ethyl-2-cyano-3,3-diphenylacrylate, 2-ethylhexyl-2-cyano-3,3-diphenylacrylate, 2-(2-hydroxy-4-hexyloxyphenyl)-4,6-diphenyltriazine, (co)polymers of 2-hydroxy-4-(2-acryloxyethoxy)benzophenone, (co)polymers of 2-(2'-hydroxy-5'-methacryloxyethylphenyl)-2H-benzotriazole, the reaction product of 2,4-dihydroxy benzophenone with γ-glycidoxypropyltrimethoxysilane, the reaction product of 2,2',4,4'-tetrahydroxybenzophenone with γ-glycidoxypropyltrimethoxysilane, and (partial) hydrolyzates thereof. These UV absorbers may be used in admixture of two or more.

The additional organic UV absorber may be added in an amount of 0 to 50 parts, specifically, greater than 0 to 50 parts, more specifically, 0.3 to 15 parts, and even more specifically, 0.3 to 5 parts by weight per 100 parts by weight of the solids in the wet coating composition. However, there is a risk that the additional organic UV absorber bleeds out since the organic UV absorber free of a reactive (meth)acrylic group does not react with the binder precursor and is not fixed in the intermediate layer. The bled-out UV absorber may adversely affect the adhesion between intermediate layer (II) and plasma layer.

For the purpose of smoothening a coating, fluorochemical or silicone surfactants such as Fluorad FC-4430 (Sumitomo 3M) and KP-341 (Shin-Etsu Chemical Co., Ltd.) may be added in effective amounts. For the purpose of promoting cure of a coating, crosslinking cure catalysts such as Neostann U-810 (Nitto Kasei Co., Ltd.), B-7 (Nippon Soda Co., Ltd.) and Orgatix ZA-60 and TC-200 (Matsumoto Fine Chemical Co., Ltd.) may be added in catalytic amounts.

Any suitable organic solvent may be selected in accordance with a particular application method. For example, a choice may be made from alcohol solvents such as isobutanol, glycol solvents such as propylene glycol monomethyl ether, ester solvents such as n-butyl acetate, ketone solvents such as methyl isobutyl ketone, aromatic solvents such as toluene, and combinations thereof. The solvent is used in such amounts that the coating composition may have a viscosity of up to 20 mPa·s where spray coating is employed, or a viscosity of up to 100 mPa·s where shower flow coating or dipping is employed. In the case of high-solids type coating compositions having a solid content in excess of 80% by weight, the solvent should be carefully selected while taking into account the solubility of additives.

Although the thickness of intermediate layer (II) is not particularly limited, the intermediate layer can have a thickness of 0.1 to 50 µm. A thickness in the range of I to 30 µm is desirable for ensuring that the coating layer has hardness, abrasion resistance, long-term stable adhesion and crack resistance. If the thickness is less than 0.1 µm, the coating may become defective or fail to impart a satisfactory UV absorbing capability. If the thickness exceeds 50 µm, the coating is likely to crack.

The wet coating composition may be applied to the substrate by any ordinary coating technique. Suitable coating techniques include brush coating, spray coating, dipping, flow coating, roll coating, curtain coating, spin coating, and knife coating.

After the wet coating composition is applied, the coating may be dried before the intermediate layer (II) is completed. The drying is not particularly limited as long as the solvent is removed. Most often, the coating is heated at a temperature below the heat resistant temperature of the substrate. The coating can be heated at a temperature of 15 to 120°C for 1 to 20 minutes.

The wet coating composition is cured by light exposure. The source and dose of exposure are not particularly limited. Exemplary exposure sources include low, medium, high and ultra-high pressure mercury lamps, chemical lamps, carbon arc lamps, xenon lamps, metal halide lamps, fluorescent lamps, tungsten lamps and sunlight. The exposure dose can be in a range of 100 to 10,000 milliJoule per square centimeter (mJ/cm²) at 365 nm, more specifically, 300 to 5,000 mJ/cm² at 365 nm.

In wet coating the resin substrate with the wet coating composition, the composition may be applied to the substrate surface directly or via another coating layer, if desired, such as a primer layer, UV-absorbing layer, printing layer, recording layer, thermal barrier layer, adhesive layer or inorganic evaporated layer.

On the surface of the laminate, another coating layer may be formed, if desired, such as an adhesive layer, UV-absorbing layer, printing layer, recording layer, thermal barrier layer, adhesive layer, inorganic evaporated layer, water and/or oil repellent layer or hydrophilic anti-fouling layer.

### Substrate

The substrate used herein may be made of any plastic materials (e.g., organic resin substrate), for example, desirably polycarbonate, polystyrene, polyesters, acrylic resins, modified acrylic resins, urethane resins, thiourethane resins, polycondensates of halogenated bisphenol A and ethylene glycol, acrylic urethane resins, halogenated aryl-containing acrylic resins, sulfur-containing resins, and combinations comprising at least one of the foregoing. These resin substrates which have been surface treated, specifically by conversion treatment, corona discharge treatment, plasma treatment, acid or alkaline treatment, or combination treatment comprising at least one of the foregoing are also useful. Also the substrate may be a monolithic or multilayer structure. Included are laminated substrates comprising a base resin substrate and a surface layer formed thereon from a resin of different type from the base resin. Exemplary laminated substrates include those consisting of a monolithic substrate of plastic material (typically, transparent plastic material such as polycarbonate) and a multilayer coating deposited directly on the substrate surface in physical contact therewith. Another embodiment is a substrate consisting of a plurality of layers, which is prepared by co-extrusion or lamination technique, for example. Examples of the laminated substrate consisting of a plurality of layers include those having a cap layer (e.g., acrylic resin layer and/or urethane resin layer) and a plastic layer formed by co-extrusion or lamination technique. In this case, the multilayer coating is formed on top of the cap layer. The substrate of multilayer structure is typically a substrate comprising a plastic substrate and a UV-absorbing cap layer, with examples including a multilayer substrate having a polycarbonate base resin substrate and a cap layer of acrylic resin or urethane resin, and a multilayer substrate having a polyester base resin substrate and a cap layer of acrylic resin. These multilayer substrates are typically prepared by co-extrusion or lamination technique.

The laminate is characterized by abrasion resistance. An index of abrasion resistance is a delta haze value (ΔHz) in the Taber abrasion test. Specifically, a ΔHz value is determined according to ASTM D1044 by mounting a Taber abrasion tester with abrasion wheels CS-10F, measuring the haze after 1,000 rounds under a load of 500 grams (g), and calculating a difference (ΔHz) between haze values before and after the test. The laminate c can have Δ Hz of up to 5.0%, specifically, up to 3.0%, and more specifically, less than 2.0%.

The present laminate is also characterized by adhesion. An index of adhesion is given by the adhesion test of (A) immersing in ion exchanged water at 65°C for 10 days according to ASTM D870 and measuring adhesion by the tape test of ASTM D3359, Test Method B and by the adhesion test of (B) immersing in ion exchanged water at 100°C for 2 hours according to ASTM D870 and measuring adhesion by the tape test of ASTM D3359, Test Method B. The sample is evaluated good in adhesion when less than or equal to 3% of the coating area is removed after both of the above tests (A) and (B).

The present laminate is further characterized by weather resistance. An index of weather resistance is given by a weathering test to see whether or not a coating is kept intact, that is, whether or not a coating is cracked or delaminated, and also whether or not a laminate is yellowed. To examine the development of cracks in a coating, the weathering test is carried out by using Eyesuper UV tester W-151 (Iwasaki Electric Co., Ltd.), and repeating cycles consisting of [black panel temperature 63°C, humidity 50% RH, illuminance 50 milliwatts per square centimeter (mW/cm²), water spray intervals of 10 seconds per hour (sec/hour) for 5 hours] and [black panel temperature 30°C, humidity 95% relative humidity (RH) for one hour]. Those samples whose coating exhibits neither cracking nor delamination or whose substrate exhibits a change of yellowing index of 3.0 or less after 30 cycles are regarded as passing the test.

### EXAMPLES

Examples of the laminate are given below by way of illustration and not by way of limitation. In Examples, all parts and percentages are by weight unless otherwise indicated. Viscosity is measured at 25°C according to JIS Z8803. Mw is a weight average molecular weight as measured by GPC versus polystyrene standards. GPC stands for gel permeation chromatography, ¹H-NMR for proton nuclear magnetic resonance spectroscopy, and IR for infrared absorption spectroscopy.

### Synthesis of reactive UV absorbers (A): Synthesis Example 1

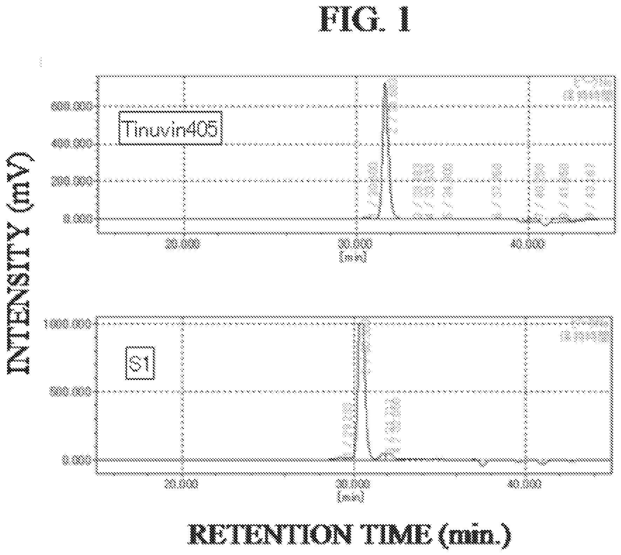

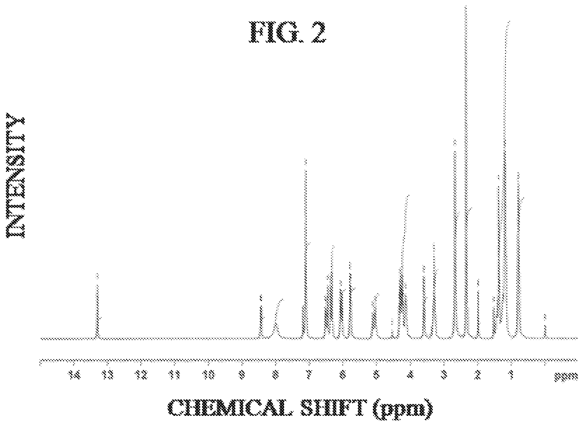

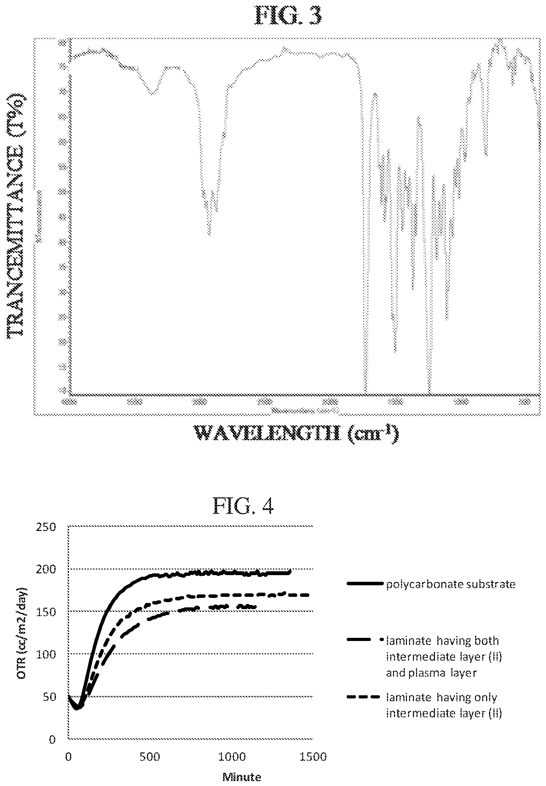

A 1-L flask was charged with 87.6 g (0.15 mol) of Tinuvin 405 (BASF, 2-[4-[(2-hydroxy-3-(2'-ethyl)hexyl)oxy]-2-hydroxyphenyl]-4,6-bis(2,4-dimethylphenyl)-1,3,5-triazine), 391.5 g of propylene glycol monomethyl ether acetate, and 0.12 g of methoxyphenol, which were heated and stirred at 80°C in a 4% oxygen/nitrogen atmosphere. To the flask, 35.9 g (0.15 mol) of Karenz BEI (Showa Denko K.K., 1,1-bis(acryloyloxymethyl)ethyl isocyanate) and 0.12 g of dioctyltin oxide were added, followed by reaction at 80°C for 5 hours. The reaction solution was cooled to room temperature, passed through a silica gel-loaded column, and concentrated in vacuum, obtaining 110.8 g of a yellow clear viscous liquid. From the analysis results including GPC (FIG. 1), ¹H-NMR (FIG. 2), and IR (FIG. 3), this liquid was identified to be a compound S1 of the following formula (12). The compound S1 can have a UV absorbing group content of 48% as calculated from formula (12).

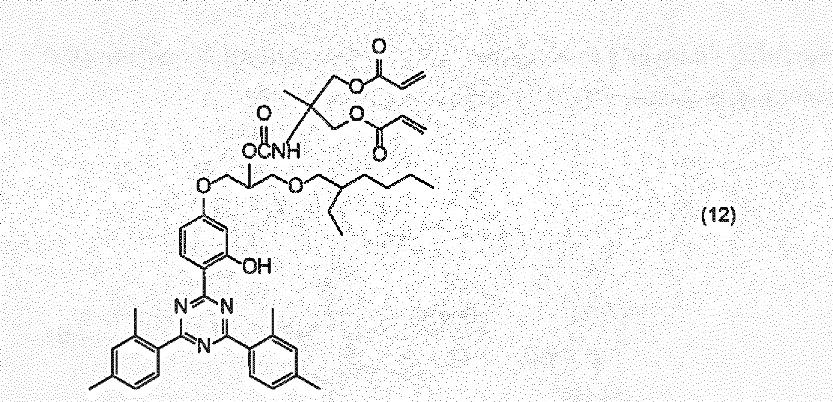

### Synthesis Example 2

A 1-L flask was charged with 101.7 g (0.15 mol) of Tinuvin 479 (BASF, 2-[2-hydroxy-4-(1-octyloxycarbonylethoxy)phenyl]-4,6-bis(4-phenylphenyl)-1,3,5-triazine), 220 g of 1,1,1-tris(hydroxymethyl)propane, and 8 g of dioctyltin oxide, which were heated and stirred at 165°C for 5 hours in a nitrogen atmosphere. The reaction solution was cooled to room temperature and crystallized from methanol. The crystals were filtered and washed with methanol. Subsequent recrystallization from toluene yielded a precursor having the following formula (20).

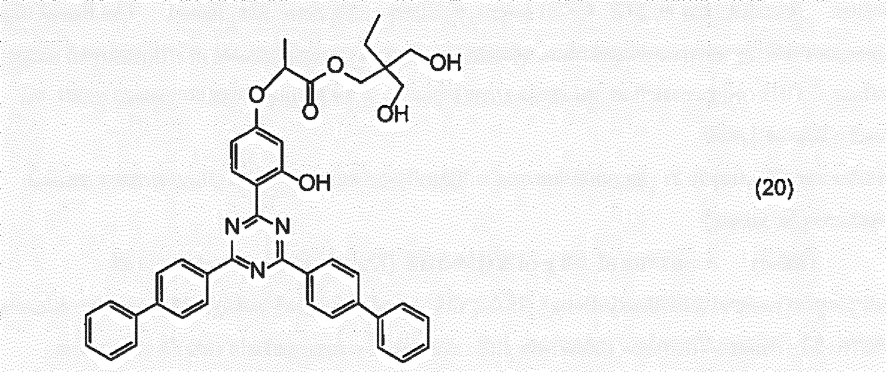

Next, a 500 milliliter (mL) flask was charged with 35 g (0.05 mol) of the precursor of formula (20), 130.5 g of propylene glycol monomethyl ether acetate, and 0.04 g of methoxyphenol, which were heated and stirred at 80°C in a 4% oxygen/nitrogen atmosphere. To the flask, 24 g (0.1 mol) of Karenz BEI (Showa Denko K.K., 1,1-bis(acryloyloxymethyl)ethyl isocyanate) and 0.04 g of dioctyltin oxide were added, followed by reaction at 80°C for 5 hours. The reaction solution was cooled to room temperature, passed through a silica gel-loaded column, and concentrated in vacuum, obtaining 41.8 g of a compound S3 having the following formula (15). The compound S3 can have a UV absorbing group content of 41% as calculated from formula (15).

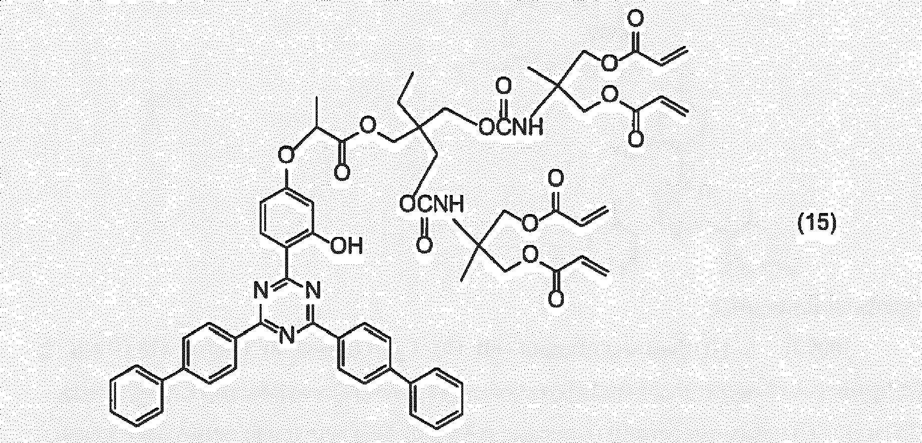

### Reference Example 1: (Hydrolytic condensate of trifunctional acrylic silane)

KBM-5103 (Shin-Etsu Chemical Co., Ltd., acryloyloxypropyltrimethoxysilane), 142 g, was combined with 500 g of isopropyl alcohol, 0.1 g of p-methoxyphenol, 1.0 g of tetramethylammonium hydroxide, and 20 g of deionized water. Reaction run at 20°C for 24 hours, yielding a colorless clear liquid. The liquid was concentrated by vacuum distillation, obtaining a hydrolytic condensate of trifunctional acrylic silane ("5103 condensate") as colorless clear liquid. It had a nonvolatile content of 99.3% and a Mw of 1,900.

### Reference Example 2: (Organic/inorganic hybrid acrylate; colloidal silica surface treated with acrylic silane)

A mixture of 2.8 g of KBM-5103 (Shin-Etsu Chemical Co., Ltd., acryloyloxypropyltrimethoxysilane), 95.6 g (28.7 g of solids) of methyl ethyl ketone silica sol MEK-ST (Nissan Chemical Industries, Ltd., number average particle size 45 nm, silica concentration 30%), and 0.1 g of deionized water was stirred at 80°C for 3 hours. Methyl orthoformate, 1.4 g, was added to the mixture, which was heated and stirred at the same temperature for 1 hour, yielding a dispersion of surface treated silica particles ("5103-treated silica"). The dispersion had a solid content of 32%. The silica particles had an average particle size of 45 nm.

### Reference Example 3: (Hydrolytic condensate of difunctional acrylic silane)

KBM-5102 (Shin-Etsu Chemical Co., Ltd., acryloyloxypropylmethyldimethoxysilane), 155 g, was combined with 0.15 g of p-methoxyphenol, 3.9 g of ethanol, and 1.9 g of cation exchange resin Purolite® CT-169DR. The mixture was thoroughly stirred. Then 25.5 g of deionized water was added to the mixture, which was stirred at room temperature for 1 hour, heated at 70°C and stirred for a further 2 hours. The reaction mixture was concentrated by vacuum distillation and passed through a mesh filter to remove the cation exchange resin, obtaining a hydrolytic condensate of difunctional acrylic silane ("5102 condensate") as colorless clear liquid. It had a nonvolatile content of 98.8% and a viscosity of 129 milliPascal-second (mPa·s).

### PREPARATION OF WET COATING COMPOSITION

### Preparation Examples 1 to 4 and Comparative Preparation Examples 1 to 5

Photo-curable coating compositions (α1 to α4, α7 to α11) were prepared by mixing a reactive UV absorber (A) which was selected from compounds S1 and S2 of Synthesis Examples 1 and 2 with a multifunctional (meth)acrylate (B), a photopolymerization initiator (C) and other components in the amounts shown in Table 1 at room temperature for 30 minutes and filtering through a paper filter #2.

| TABLE 1 | | | | | | | | | | |
|---|---|---|---|---|---|---|---|---|---|---|
| | | Preparation Example | | | | Comparative Preparation Example | | | | |
| | | 1 | 2 | 3 | 4 | 1 | 2 | 3 | 4 | 5 |
| | Formulation | α1 | α2 | α3 | α4 | α7 | α8 | α9 | α10 | α11 |
| Component A | S1 | 20 | 20 | 30 | | | | | | |
| | S2 | | | | 40 | | | | | |
| Component B | A-M403 | 60 | | | 10 | | | | | |
| | HDDA | 20 | 20 | 20 | 20 | 20 | 20 | 20 | 20 | 20 |
| | U-4HA | | 80 | 60 | 55 | 60 | 60 | 60 | 60 | 60 |
| | 5103 condensate | 20 | | 20 | | 20 | 20 | 20 | 20 | 20 |
| | 5103-treated SiO₂ | | | | 5 | | | | | |
| | 5102 condensate | | | | 10 | | | | | |
| Component C | I754 | 1.8 | 1.8 | 1.8 | | | | 1.8 | 1.8 | 1.8 |
| | I184 | | | | 1.8 | | 3 | | | |
| | TPO | 1.8 | 1.8 | 1.8 | 1.8 | | 0.6 | 1.8 | 1.8 | 1.8 |
| Other components | T928 | | | | | | 3 | 20 | | |
| | R93 | | | | | | | | 20 | |
| | T400 | | | | | | | | | 20 |
| | TiO₂ | | | | 5 | | | | | |
| | HALS | | | 1 | | | | | | |
| | KP341 | 0.05 | 0.05 | 0.05 | 0.05 | 0.05 | 0.05 | 0.05 | 0.05 | 0.05 |
| | PGM | 120 | 120 | 120 | 145 | 100 | 103 | 120 | 120 | 120 |

The abbreviations in Table 1 are as follows.

**Component (B)**

| | |
|---|---|
| **A-M403:** | dipentaerythritol penta- and hexaacrylate available under the trade name Aronix M403 from Toagosei Co., Ltd. |
| **HDDA:** | 1,6-hexane diol diacrylate available under the trade name HDDA from Daicel-Allnex Ltd. |
| **U-4HA:** | urethane acrylate of non-yellowing type available under the trade name U-4HA from Shin-Nakamura Chemical Co., Ltd. |
| **5103 condensate:** | hydrolytic condensate of KBM-5103 (trade name of 3-acryloxypropyl trimethoxysilane from Shin-Etsu Chemical Co., Ltd.), see Reference Example 1 |
| **5103-treated silica:** | silica: organic/inorganic hybrid acrylate dispersion, that is, dispersion in organic solvent of colloidal silica surface treated with KBM-5103 (trade name of 3-acryloxypropyltrimethoxysilane from Shin-Etsu Chemical Co., Ltd.), see Reference Example 2 |
| **5102 condensate:** | hydrolytic condensate of KBM-5102 (trade name of 3-acryloxypropylmethyldimethoxysilane from Shin-Etsu Chemical Co., Ltd.), see Reference Example 3 |

**Component (C)**

| | |
|---|---|
| **I754:** | a mixture of oxyphenylacetic acid 2-[2-oxo-2-phenylacetoxyethoxy]ethyl ester and oxyphenylacetic acid 2-(2-hydroxyethoxy)ethyl ester available as photopolymerization initiator under the trade name IRGACURE 754 from BASF |
| **I184:** | 1-hydroxycyclohexyl phenyl ketone available as photopolymerization initiator under the trade name IRGACURE 184 from BASF |
| **TPO:** | 2,4,6-trimethylbenzoyldiphenylphosphine oxide available as photopolymerization initiator under the trade name Lucilin TPO from BASF |

**Other components**

| | |
|---|---|
| **T928:** | 2-(2H-benzotriazol-2-yl)-6-(1-methyl-1-phenylethyl)-4-(1,1,3,3-tetramethylbutyl)phenol available as UV absorber under the trade name TINUVIN 928 from BASF |
| **R93:** | 2-(2'-hydroxy-5'-methacryloxyethylphenyl)-2H-benzotriazole available as UV absorber under the trade name RUVA93 from Otsuka Chemical Co., Ltd. |
| **T400:** | a mixture of 85% the reaction product of 2-(4,6-bis(2,4-dimethylphenyl)-1,3,5-triazin-2-yl)-5-hydroxyphenyl with oxirane ((C₁₀-C₁₆, mainly C₁₂-C₁₃ alkyloxy)methyl oxirane) and 15% 1-methoxy-2-propanol, available as UV absorber under the trade name TINUVIN 400 from BASF |
| **TiO₂:** | a dispersion of surface treated titanium oxide in organic solvent, available under the trade name Nano-Tek RTTDNB 15 wt%-E88 from C.I. Kasei Co., Ltd. |
| **HALS:** | 1,2,2,6,6-pentamethyl-4-piperidinyl methacrylate available under the trade name LA-82 from Adeka Co., Ltd. |
| **KP341:** | polyether-modified silicone available under the trade name KP341 from Shin-Etsu Chemical Co., Ltd. |
| **PGM:** | propylene glycol monomethyl ether |

### PREPARATION AND EVALUATION OF LAMINATES

### Example 1

Photo-curable coating composition (α1) in Preparation Example 1 was flow coated onto a cleaned surface of a Lexan™ polycarbonate plate (150 mm by 150 mm by 4 mm thick) and heated at 80°C for 5 minutes for evaporating off the solvent. Using a conveyor type UV exposure unit equipped with a 120 watts(W) high-pressure mercury lamp, the coating was exposed to UV radiation in a nitrogen atmosphere so as to provide an integral dose of 600 mJ/cm² at 365 nm. In this way, a cured film having a thickness of about 9 to 11 µm was obtained as intermediate layer (II).

Next, plasma polymerization was carried out to deposit a film composed of silicon, oxygen, carbon and hydrogen on the cured film as plasma layer, yielding a laminate. Specifically, prior to plasma polymerization, the substrate having a cured film of the photo-curable coating composition formed thereon was cleaned by manual operation using an isopropyl alcohol/deionized water-drenched lint-free cloth. Plasma polymerization was then carried out in a vacuum chamber by the continuous, 2-sided expanding thermal plasma process (C.D. Iacovangelo et al., "Expanding thermal plasma deposition system", US Patent Application 2005/0202184, March 8, 2005). Two plasma coating stations consisted of arrays of expanding thermal plasma sources that issued argon plasma jets at supersonic speeds. The plasma jets expanded in the plasma coating stations and reacted with an organosilicon reagent and optional oxidizing agent that were injected directly into the chamber. The organosilicon reagent used herein was octamethylcyclotetrasiloxane (by Gelest Inc.), and the oxidizing agent was 99% pure oxygen of industrial grade (by Airgas Inc.). The substrate was continuously transported through the chamber and heated at approximately 40-70°C before entering the coating stations.

Variables of the plasma process included the heating temperature of the preheat chamber, linear transportation speed, flow rates of organosilicon, oxygen and argon, and current/plasma source. The process pressure was in a range of 30 to 70 milliTorr (mTorr). These process variables were adjusted so as to form a solid layer with specific chemical and physical properties for the purpose of establishing the abrasion resistance and other properties of the laminate and the adhesion of intermediate layer (II). The conditions of the plasma process are shown in Table 2.

### Examples 2 to 7

Laminates were manufactured by the same procedure as in Example 1, using photo-curable coating compositions (α1) to (α4) in Preparation Examples 1 to 4. The laminates were evaluated by the following tests, with the results shown in Table 3.

### Comparative Examples 1 to 6

Laminates were manufactured by the same procedure as in Example 1, using photo-curable coating compositions (α1) and (α7) to (α11) in Preparation Example 1 and Comparative Preparation Examples 1 to 5. It is noted that in Comparative Example 6, plasma layer was omitted. The laminates were evaluated by the following tests, with the results shown in Table 4.

### Initial Haze (Hz)

A laminate sample was measured for haze by a haze meter NDH5000SP (Nippon Denshoku Industries Co., Ltd.).

### Abrasion resistance (ΔHz)

Abrasion resistance was analyzed according to ASTM D1044 by mounting a Taber abrasion tester with wheels CS-10F, measuring a haze after 1,000 rounds under a load of 500 g, and calculating a haze difference (ΔHz) before and after the test. A delta haze (ΔHz) value of 2.0% or less is regarded acceptable.

### Initial adhesion

Adhesion was analyzed by a cross-hatch adhesion test according to ASTM D3359 Test Method B, specifically by scribing the laminate with a razor along 11 longitudinal and 11 transverse lines at a spacing of 1 mm to define 100 square sections, tightly attaching adhesive tape thereto, rapidly pulling back the adhesive tape at an angle of 90°, and calculating the percent area of coating sections delaminated. An initial adhesion (i.e., 100% - percent of coating area delaminated) of greater than or equal to 97% is regarded as acceptable.

### Adhesion after boiling water immersion

The laminate was immersed in deionized water at 100°C for 2 hours before it was examined by the same adhesion test (ASTM D3359 Test Method B) as the initial adhesion. An adhesion value (i.e., 100% - percent of coating area delaminated) of greater than or equal to 97% is regarded as acceptable

### Adhesion after water immersion

The laminate was immersed in deionized water at 65°C for 10 days before it was examined by the same adhesion test (ASTM D3359 Test Method B) as the initial adhesion. A post-immersion adhesion (i.e., 100% - percent of coating area delaminated) value of at least 97% is regarded acceptable.

### Weather resistance

A weathering test was carried out by means of Eyesuper UV tester W-151 (Iwasaki Electric Co., Ltd.) which operated one cycle of [black panel temperature 63°C, humidity 50% RH, illuminance 50 mW/cm², water spray intervals of 10 sec/hour for 4 hours] and [black panel temperature 30°C, humidity 95% RH for one hour]. The test repeated 30 and 70 cycles. A yellowing index (YI) was measured according to JIS K7103 before and after the test, from which a change of yellowing index (Δ YI) was computed. The weathered laminate was also examined for cracks and delamination with naked eyes or under a microscope (250× magnifying power). A sample that has experienced a change of yellowing index (Δ YI) of 3.0 or less after 30 cycles and no external appearance defects (such as cracks or delamination) is regarded acceptable.

### Crack

The coating appearance after the weathering test was rated according to the following criterion.
○: intact
Δ: some cracks
×: cracks on entire coating

### Delamination

The coating after the weathering test was rated according to the following criterion.
○: intact
Δ: some delamination
×: overall delamination

| TABLE 2 | | |
|---|---|---|
| Plasma process conditions | | |
| Plasma recipe code | 012214A | 012214B |
| Linear transportation speed(cm/s) | 1.8 | 1.8 |
| Preheating temperature (heater surface, °C) | 350 | 375 |
| Flow rate of organosilicon per plasma source for first plasma coating (sccm*) | 175 | 175 |
| Flow rate of oxygen per plasma source for first plasma coating (sccm) | 0 | 0 |
| Flow rate of argon per plasma source for first plasma coating (sccm) | 1000 | 1000 |
| Current per plasma source for first plasma coating (A) | 40 | 40 |
| Flow rate of organosilicon per plasma source for second plasma coating (sccm) | 200 | 200 |
| Flow rate of oxygen per plasma source for second plasma coating (sccm) | 1000 | 1000 |
| Flow rate of argon per plasma source for second plasma coating (sccm) | 1000 | 1000 |
| Current per plasma source for second plasma coating (A) | 40 | 40 |

| | | |
|---|---|---|
| * sccm is standard cubic centimeters per minute. | | |

| TABLE 3 | | | | | | | | |
|---|---|---|---|---|---|---|---|---|
| | Layer structure | Example | | | | | | |
| | | 1 | 2 | 3 | 4 | 5 | 6 | 7 |
| Intermediate layer II | Photo-curable coating composition | α1 | α 2 | α 3 | α 1 | α 2 | α 3 | α 4 |
| | Outer appearance | good | good | good | good | good | good | good |
| | Thickness (µm) | 9.2 | 9.4 | 9.3 | 9.2 | 9.4 | 9.3 | 10.6 |
| Outermost layer I | Plasma recipe code | 012214A | 012214A | 012214A | 012214B | 012214B | 012214B | 012214A |
| | Thickness (µm) | 3.1 | 3.1 | 3.1 | 3.0 | 3.0 | 3.0 | 3.1 |
| Initial haze | Hz(%) | 0.8 | 0.6 | 0.8 | 0.7 | 0.5 | 0.8 | 0.9 |
| Abrasion resistance | ΔHz | 1.8 | 1.5 | 2.1 | 1.7 | 1.2 | 1.6 | 0.8 |
| Initial adhesion | (%) | 100 | 100 | 100 | 100 | 100 | 100 | 100 |
| Adhesion after boiling water immersion 2 hr | Appearance change | no | no | no | no | no | no | no |
| | (%) | 100 | 100 | 100 | 100 | 100 | 100 | 100 |
| Adhesion after water immersion 65°C/10 days | Appearance change | no | no | no | no | no | no | no |
| | (%) | 100 | 100 | 100 | 100 | 100 | 100 | 100 |
| Weather resistance @30 cycles | ΔYI | 1.9 | 2.1 | 1.0 | 1.7 | 1.8 | 1.2 | 1.1 |
| | Crack | ○ | ○ | ○ | ○ | ○ | ○ | ○ |
| | Delamination | ○ | ○ | ○ | ○ | ○ | ○ | ○ |
| Weather resistance @70 cycles | ΔYI | 4.6 | 4.0 | 3.6 | 4.5 | 4.2 | 4.1 | 3.2 |
| | Crack | ○ | ○ | ○ | ○ | ○ | ○ | ○ |
| | Delamination | ○ | Δ | ○ | ○ | Δ | ○ | ○ |

| TABLE 4 | | | | | | | | |
|---|---|---|---|---|---|---|---|---|
| | Layer | Comparative Example | | | | | | |
| | structure | 1 | 2 | 3 | 4 | 5 | 6 | |
| Intermediate layer II | Photo-curable coating composition | α 7 | α 8 | α 9 | α 10 | α 11 | α 1 | |
| | Outer appearance | good | good | good | R93 precipitated | good | good | |
| | Thickness (µm) | 9.5 | 9.9 | 9.9 | 9.6 | 9.4 | 9.2 | |
| Outermost layer I | Plasma recipe code | 012214A | 012214A | 012214A | 012214A | 012214A | - | |
| | Thickness (µm) | 3.1 | 3.1 | 3.1 | 3.1 | 3.1 | - | |

| Test results of laminates | | | | | | | | |
|---|---|---|---|---|---|---|---|---|
| Initial haze | Hz (%) | 0.3 | 0.8 | 1.9 | 2.8 | 0.9 | 0.5 | |
| Abrasion resistance | ΔHz | 1.8 | 1.6 | 2.6 | 2.9 | 1.9 | 7.1 | |
| Initial adhesion | (%) | 100 | 100 | 100 | 100 | 98 | 100 | |
| Adhesion after boiling water immersion 2 hr | Appearance change | no | no | hazy | hazy | no | no | |
| | (%) | 100 | 100 | 10 | 100 | 100 | 100 | |
| Adhesion after water immersion 65°C/10 days | Appearance change | no | no | delaminati on | hazy | hazy | no | |
| | (%) | 98 | 85 | 0 | 90 | 70 | 100 | |
| Weather resistance @30 cycles | ΔYI | 18.6 | 13.2 | 3.4 | 3.1 | 2.8 | 3.1 | |
| | Crack | Δ | Δ | Δ | ○ | Δ | ○ | |
| | Delamination | × | × | × | Δ | × | ○ | |
| Weather resistance @70 cycles | ΔYI | - | - | - | 12.6 | - | 7.2 | |
| | Crack | - | - | - | Δ | - | Δ | |
| | Delamination | - | - | - | × | - | ○ | |

As seen from Tables 3 and 4, the laminates herein are substantially improved in abrasion resistance. Examples 1 to 7 including plasma layer showed Δ Hz values of 2.0% or less (good abrasion resistance), whereas Comparative Example 6 without plasma layer showed a Δ Hz value of 7.1% (poor abrasion resistance). Examples 1 to 7 showed a Δ Hz value of 2.0% or less and a Δ YI value after 30 cycles of 3.0 or less, specifically 2.0 or less (minimal yellowing index change). In contrast, Comparative Examples 1 and 2 showed a Δ Hz value of 2.0% or less, but a Δ YI value of more than 10 and delamination because the intermediate layer (II) contained no or a reduced amount of UV absorber. Comparative Examples 3 and 4 including intermediate layer (II) which contained large amounts of commercially available UV absorbers, showed precipitation of the UV absorber because of its low compatibility (Comparative Examples 4), and had an initial haze of more than 1% and a Δ Hz value of more than 2.0% (Comparative Examples 3). Comparative Example 5 using highly compatible liquid UV absorber showed delamination in the weather resistance test of 30 cycles because the absorber was free of a binder-reactive group probably due to bleed-out of the UV absorber. All the properties that the inventive laminate should possess are not met by Comparative Examples.

### Example 8

Using photo-curable coating composition (α 1) in Preparation Example 1 and a cleaned Lexan™ polycarbonate plate (100 mm by 100 mm by 0.5 mm thick), two laminates were prepared by the same procedures as in Example 1 and Comparative Example 6. These two laminates and a neat polycarbonate plate were measured for oxygen permeability, using an 8000 series Oxygen Permeation Analyzer available from Illinois Instruments, Inc. The laminate was secured to the jig via an O-ring, with plasma layer in contact with the measuring cell, and measurement was at 25°C and 90% RH. Measurement was carried out once every 10 minutes over 15 hours to allow measurements to converge on a substantially constant value. The oxygen permeability measured was 195 cc/m²/day for the polycarbonate substrate, 168 cc/m²/day for the laminate having only intermediate layer (II) of the photo-curable coating composition stacked thereon, and 158 cc/m²/day for the laminate having both intermediate layer (II) and plasma layer stacked thereon. (FIG. 4)

An embodiment can comprise an organic resin laminate (e.g., having a high level of abrasion resistance and weather resistance), comprising an organic resin substrate and a multilayer coating system on one or both surfaces of the substrate. The multilayer coating system can include a plasma layer which is a hard coating obtained from plasma polymerization of an organosilicon compound, and an intermediate layer (II) which is a cured coating of a wet coating composition, the intermediate layer (II) having one surface disposed contiguous to the plasma layer and another surface disposed contiguous to the organic resin substrate. The wet coating composition comprises (A) a specific reactive UV absorber, (B) a multi-functional (meth)acrylate, and (C) a photopolymerization initiator.

Another embodiment of a method for manufacturing an organic resin laminate comprises furnishing an organic resin substrate, applying a wet coating composition to a surface of the substrate to form an intermediate layer (II), and effecting plasma polymerization of an organosilicon compound to form a plasma layer on the intermediate layer (II). The wet coating composition comprises (A) a specific reactive UV absorber, (B) a multi-functional (meth)acrylate, and (C) a photopolymerization initiator. Various embodiments are included. In embodiment (i), the substrate is furnished by an extrusion, co-extrusion or laminating technique. In embodiment (ii), the wet coating composition is brought in physical contact with a substrate to form a monolithic substrate. In embodiment (iii), the substrate is furnished by extruding a plastic material (e.g., transparent plastic material, specifically optically clear plastic material) and a cap layer. In a still further embodiment, the substrate is furnished by laminating a plastic material (e.g., transparent plastic material, specifically optically clear plastic material) and a cap layer.

Set forth below are some embodiments disclosed herein.
Embodiment 1: A method of making an organic resin laminate, comprising: applying a wet coating to an organic resin substrate to form to form an intermediate layer (II) on the substrate, wherein the wet coating comprises a multi-functional (meth)acrylate, a photopolymerization initiator, and a reactive UV absorber having the general formula (1): 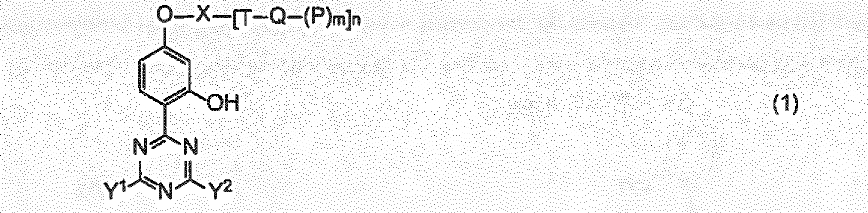 wherein Y¹ and Y² are each independently a substituent group of the general formula (2): 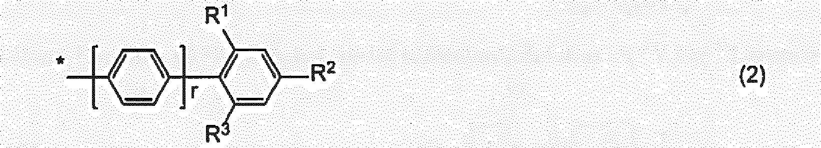 wherein * stands for a bonding site, r is 0 or 1, R¹, R² and R³ are each independently selected from the group consisting of hydrogen, hydroxyl, C₁-C₂₀ alkyl, C₄-C₁₂ cycloalkyl, C₂-C₂₀ alkenyl, C₁-C₂₀ alkoxy, C₄-C₁₂ cycloalkoxy, C₂-C₂₀ alkenyloxy, C₇-C₂₀ aralkyl, halogen,-C≡N, C₁-C₅ haloalkyl, -SO₂R', -SO₃H, -SO₃M (M = alkali metal), -COOR', -CONHR',-CONR'R", -OCOOR', -OCOR', -OCONHR', (meth)acrylamino, (meth)acryloxy, optionally substituted C₆-C₁₂ aryl and optionally substituted C₃-C₁₂ heteroaryl, wherein R' and R" are each independently hydrogen, C₁-C₂₀ alkyl, C₄-C₁₂ cycloalkyl, optionally substituted C₆-C₁₂ aryl or optionally substituted C₃-C₁₂ heteroaryl; X is a di-, tri- or tetravalent, linear or branched, saturated hydrocarbon residue which may be separated by at least one element of oxygen, nitrogen, sulfur, and phosphor; T is a urethane group -O-(C=O)-NH-; Q is a di- or trivalent, linear or branched, saturated hydrocarbon residue which may be separated by at least one element of oxygen, nitrogen, sulfur, and phosphor; P is (meth)acryloxy; and m is 1 or 2, and n is an integer of 1 to 3, with the proviso that m and n are not equal to 1 at the same time; UV curing the wet coating to form a cured coating; and depositing a first plasma coating on the cured coating, wherein the first plasma coating is deposited using a first oxygen flow rate of less than 250 sccm per plasma source.
Embodiment 2: The method of Embodiment 1, wherein the first oxygen flow rate of less than or equal to 100 seem per plasma source.
Embodiment 3: The method of Embodiment 2, wherein the first oxygen flow rate of less than or equal to 50 sccm per plasma source.
Embodiment 4: The method of Embodiment 3, wherein the first oxygen flow rate of less than or equal to 10 sccm per plasma source.
Embodiment 5: A method of making an organic resin laminate, comprising: applying a wet coating to an organic resin substrate to form an intermediate layer (II) on a substrate, wherein the wet coating comprises a multi-functional (meth)acrylate, a photopolymerization initiator, and a reactive UV absorber having the general formula (1): 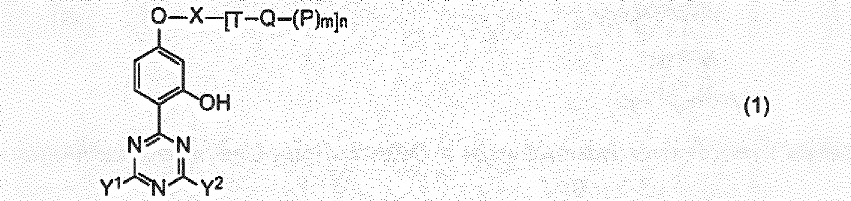 wherein Y¹ and Y² are each independently a substituent group of the general formula (2): 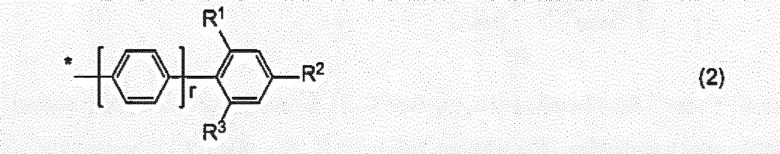 wherein * stands for a bonding site, r is 0 or 1, R¹, R² and R³ are each independently selected from the group consisting of hydrogen, hydroxyl, C₁-C₂₀ alkyl, C₄₋C₁₂ cycloalkyl, C₂-C₂₀ alkenyl, C₁-C₂₀ alkoxy, C₄-C₁₂ cycloalkoxy, C₂-C₂₀ alkenyloxy, C₇-C₂₀ aralkyl, halogen, -C≡N, C₁-C₅ haloalkyl, -SO₂R', -SO₃H, -SO₃M (M = alkali metal), -COOR', -CONHR', -CONR'R", -OCOOR', -OCOR', -OCONHR', (meth)acrylamino, (meth)acryloxy, optionally substituted C₆-C₁₂ aryl and optionally substituted C₃-C₁₂ heteroaryl, wherein R' and R" are each independently hydrogen, C₁-C₂₀ alkyl, C₄-C₁₂ cycloalkyl, optionally substituted C₆-C₁₂ aryl or optionally substituted C₃-C₁₂ heteroaryl; X is a di-, tri- or tetravalent, linear or branched, saturated hydrocarbon residue which may be separated by at least one element of oxygen, nitrogen, sulfur, and phosphor; T is a urethane group -O-(C=O)-NH-; Q is a di- or trivalent, linear or branched, saturated hydrocarbon residue which may be separated by at least one element of oxygen, nitrogen, sulfur, and phosphor; P is (meth)acryloxy; and m is 1 or 2, and n is an integer of 1 to 3, with the proviso that m and n are not equal to 1 at the same time; UV curing the wet coating to form a cured coating; and depositing a first plasma coating on the cured coating without an introduction of a molecular oxygen stream.
Embodiment 6: The method of any one of Embodiments 1 - 5, further comprising, depositing a second plasma coating on the first plasma coating, wherein the second plasma coating and the first plasma coating form a plasma layer, and wherein the second plasma coating is deposited using a second oxygen flow rate of greater than or equal to 250 sccm per plasma source.
Embodiment 7: The method of Embodiment 6, wherein the second oxygen flow rate is greater than or equal to 400 sccm per plasma source.
Embodiment 8: The method of Embodiment 7, wherein the second oxygen flow rate is greater than or equal to 800 sccm per plasma source.
Embodiment 9: The method of any one of Embodiments 1 - 8, wherein the first plasma coating is deposited using expanding thermal plasma deposition.
Embodiment 10: The method of any of Embodiments 1 - 9, further comprising flashing off solvent from the wet coating before the UV curing.
Embodiment 11: The method of Embodiment 10, wherein the flashing off comprises heating the coated substrate to greater than or equal to 60°C.
Embodiment 12: The method of Embodiment 11, wherein the flashing off comprises heating the coated substrate to greater than or equal to 70°C.
Embodiment 13: The method of any one of Embodiments 1 - 12, further comprising molding the substrate prior to applying the wet coating, wherein the organic resin substrate comprises polycarbonate, a blend comprising polycarbonate, or a copolymer comprising polycarbonate.
Embodiment 14: The organic resin laminate formed by the method of any of Embodiments 1 - 13.
Embodiment 15: The laminate of Embodiment 14, wherein X is a group having the general formula (3) or (4): 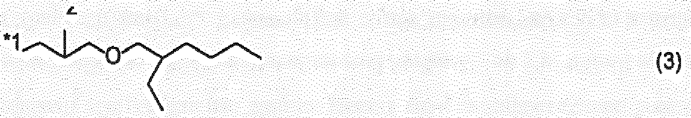 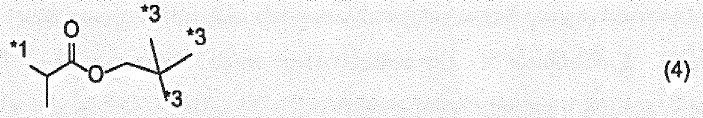 wherein *1 bonds to the oxygen in formula (1), *2 bonds to T in formula (1), *3 each independently is hydrogen or bonds to T in formula (1) directly or via a divalent, linear or branched, saturated hydrocarbon group which may be separated by at least one element of oxygen, nitrogen, sulfur, and phosphor, at least one *3 bonds to T directly or via a divalent, linear or branched, saturated hydrocarbon group which may be separated by at least one element of oxygen, nitrogen, sulfur, and phosphor; and Q is a group having the general formula (5) or (6): 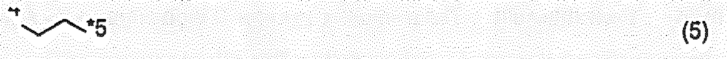 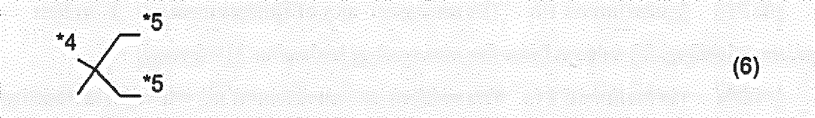 wherein *4 bonds to T in formula (1), and *5 bonds to P in formula (1).
Embodiment 16: The laminate of any of Embodiments 14 - 15, wherein in formula (1), R¹, R² and R³ are each independently hydrogen or methyl, X is a group of formula (3), Q is a group of formula (6), m is 2, and n is 1.
Embodiment 17: The laminate of any one of Embodiments 14 - 16, wherein the multi-functional (meth)acrylate (B) comprises a hydrolyzate and/or condensate of a (meth)acrylic functional alkoxysilane.
Embodiment 18: The laminate of any one of Embodiments 14 - 17, wherein the multi-functional (meth)acrylate (B) further comprises at least one member selected from the group consisting of dipentaerythritol penta(meth)acrylate, dipentaerythritol hexa(meth)acrylate, tris(2-(meth)acryloxyalkyl) isocyanurates, urethane poly(meth)acrylate compounds having at least five radical polymerizable unsaturated double bonds per molecule, and polyester poly(meth)acrylate compounds having at least five radical polymerizable unsaturated double bonds per molecule.
Embodiment 19: The laminate of any one of Embodiments 14 - 18, wherein the laminate shows a value of at least 97% in an adhesion test of immersing in ion exchanged water at 65°C for 10 days according to ASTM D870 and measuring adhesion by a tape test according to ASTM D3359-09, Test Method B.
Embodiment 20: The laminate of any one of Embodiments 14 - 19, wherein the first plasma layer, the second plasma layer or both the first plasma layer and the second plasma layer, contains silicon, oxygen, carbon and hydrogen, and is formed by plasma polymerization of an organosilicon compound.
Embodiment 21: The laminate of any one of Embodiments 14 - 20, comprising the second plasma coating and wherein the plasma layer has a total thickness in the range of 2.5 to 5.0 µm.
Embodiment 22: The laminate of Embodiment 21, comprising the second plasma coating and wherein the plasma layer has a total thickness in the range of 2.5 to 4.0 µm.
Embodiment 23: The laminate of any one of Embodiments 14 - 22, wherein the organic resin substrate comprises polycarbonate, a blend comprising polycarbonate, or a copolymer comprising polycarbonate.
Embodiment 24: The laminate of any of Embodiments 14 - 23, comprising the second plasma coating, and wherein the plasma layer has a Young's Modulus of greater than or equal to 3 GPa as determined by nanoindentation with a maximum load of 1 mN
Embodiment 25: The laminate of Embodiment 24, comprising the second plasma coating, and wherein the plasma layer has a Young's Modulus of 3 GPa to 40 GPa as determined by nanoindentation with a maximum load of 1 milliNewtons (mN).
Embodiment 26: The laminate of Embodiment 25, comprising the second plasma coating, and wherein the plasma layer has a Young's Modulus of 3 GPa to 15 GPa as determined by nanoindentation with a maximum load of 1 mN.
Embodiment 27: An organic resin laminate comprising: an organic resin substrate and a multilayer coating system on a surface of the substrate; said multilayer coating system including a plasma layer obtained from polymerization of an organosilicon compound and an intermediate layer (II) which is a UV cured coating of a coating composition, the intermediate layer (II) disposed between the plasma layer and the organic resin substrate; said coating composition comprising (A) a reactive UV absorber, (B) a multi-functional (meth)acrylate, and (C) a photopolymerization initiator, the reactive UV absorber having the general formula (1): 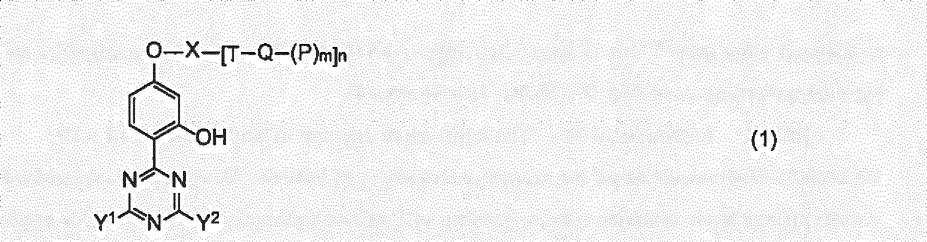 wherein Y¹ and Y² are each independently a substituent group of the general formula (2): 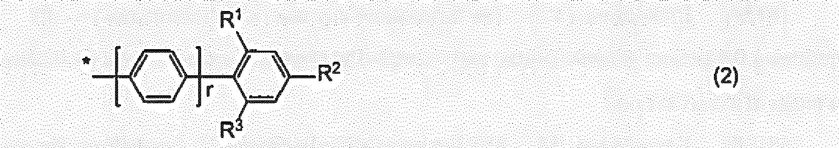 wherein * stands for a bonding site, r is 0 or 1, R¹, R² and R³ are each independently selected from the group consisting of hydrogen, hydroxyl, C₁-C₂₀ alkyl, C₄₋C₁₂ cycloalkyl, C₂-C₂₀ alkenyl, C₁-C₂₀ alkoxy, C₄-C₁₂ cycloalkoxy, C₂-C₂₀ alkenyloxy, C₇-C₂₀ aralkyl, halogen, -C≡N, C₁-C₅ haloalkyl, -SO₂R', -SO₃H, -SO₃M (M = alkali metal), -COOR', -CONHR', -CONR'R", -OCOOR', -OCOR', -OCONHR', (meth)acrylamino, (meth)acryloxy, optionally substituted C₆-C₁₂ aryl and optionally substituted C₃-C₁₂ heteroaryl, wherein R' and R" are each independently hydrogen, C₁-C₂₀ alkyl, C₄-C₁₂ cycloalkyl, optionally substituted C₆-C₁₂ aryl or optionally substituted C₃-C₁₂ heteroaryl; X is a di-, tri- or tetravalent, linear or branched, saturated hydrocarbon residue which may be separated by at least one element of oxygen, nitrogen, sulfur, and phosphor; T is a urethane group -O-(O=O)-NH-; Q is a di- or trivalent, linear or branched, saturated hydrocarbon residue which may be separated by at least one element of oxygen, nitrogen, sulfur, and phosphor; P is (meth)acryloxy; and m is 1 or 2, and n is an integer of 1 to 3, with the proviso that m and n are not equal to 1 at the same time.
Embodiment 28: The laminate of Embodiment 27, wherein X is a group having the general formula (3) or (4): 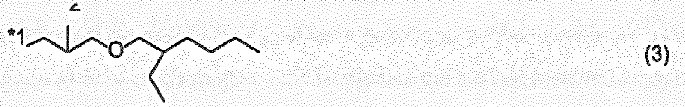 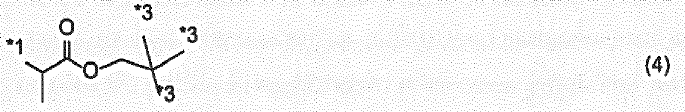 wherein *1 bonds to the oxygen in formula (1), *2 bonds to T in formula (1), *3 each independently is hydrogen or bonds to T in formula (1) directly or via a divalent, linear or branched, saturated hydrocarbon group which may be separated by at least one element of oxygen, nitrogen, sulfur, and phosphor, at least one *3 bonds to T directly or via a divalent, linear or branched, saturated hydrocarbon group which may be separated by at least one element of oxygen, nitrogen, sulfur, and phosphor; and Q is a group having the general formula (5) or (6): 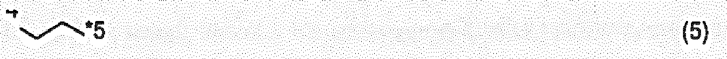 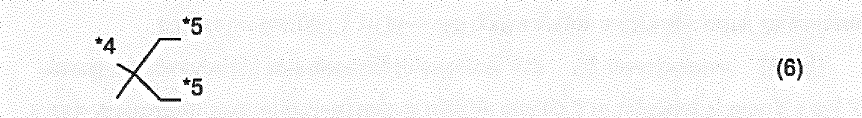 wherein *4 bonds to T in formula (1), and *5 bonds to P in formula (1).
Embodiment 29: The laminate of Embodiment 27 or 28, wherein in formula (1), R¹, R² and R³ are each independently hydrogen or methyl, X is a group of formula (3), Q is a group of formula (6), m is 2, and n is 1.
Embodiment 30: The laminate of any one of Embodiments 27 to 29, herein the multi-functional (meth)acrylate (B) comprises a hydrolyzate and/or condensate of a (meth)acrylic functional alkoxysilane.
Embodiment 31: The laminate of any one of Embodiments 27 to 30, wherein the multi-functional (meth)acrylate (B) further comprises at least one member selected from the group consisting of dipentaerythritol penta(meth)acrylate, dipentaerythritol hexa(meth)acrylate, tris(2-(meth)acryloxyalkyl) isocyanurates, urethane poly(meth)acrylate compounds having at least five radical polymerizable unsaturated double bonds per molecule, and polyester poly(meth)acrylate compounds having at least five radical polymerizable unsaturated double bonds per molecule.
Embodiment 32: The laminate of any one of Embodiments 27 to 31, wherein the plasma layer contains silicon, oxygen, carbon and hydrogen, and is formed by plasma polymerization of an organosilicon compound.
Embodiment 33: The laminate of any one of Embodiments 27 to 32, wherein the plasma layer has a total thickness in the range of 2.5 to 5.0 µm.
Embodiment 34: The laminate of Embodiment 33, wherein the plasma layer has a total thickness in the range of 2.5 to 4.0 µm.
Embodiment 35: The laminate of any one of Embodiments 27 to 34, which shows a value of at least 97% in an adhesion test of immersing in ion exchanged water at 65°C for 10 days according to ASTM D870 and measuring adhesion by a tape test according to ASTM D3359-09, Test Method B.
Embodiment 36: The laminate of any one of Embodiments 27 to 35, wherein the organic resin substrate is a molded substrate comprising polycarbonate, a blend comprising polycarbonate, or a copolymer comprising polycarbonate.
Embodiment 37: The laminate of any of Embodiments 27 - 36, wherein the plasma layer comprises a first plasma coating and a second plasma coating, and wherein the outermost plasma layer has a Young's Modulus of greater than or equal to 3 GPa as determined by nanoindentation with a maximum load of 1 milliNewton (mN).
Embodiment 38: The laminate of Embodiment 37, wherein the plasma layer has a Young's Modulus of 3 GPa to 40 GPa as determined by nanoindentation with a maximum load of 1 mN.
Embodiment 39: The laminate of Embodiment 38, wherein the plasma layer has a Young's Modulus of 3 GPa to 15 GPa as determined by nanoindentation with a maximum load of 1 mN.
Embodiment 40: An organic resin laminate, the comprising: an organic resin substrate and a multilayer coating system on a surface of the substrate, said multilayer coating system including: a plasma layer formed from polymerization of an organosilicon compound; and an intermediate layer (II) which is a UV cured coating of a reactive UV absorber, a multi-functional (meth)acrylate, and a photopolymerization initiator; wherein the laminate has a Young's Modulus of greater than or equal to 3 GPa as determined by nanoindentation with a maximum load of 1 mN.
Embodiment 41: The laminate of Embodiment 40, which shows a value of at least 97% in an adhesion test of immersing in ion exchanged water at 65°C for 10 days according to ASTM D870 and measuring adhesion by a tape test according to ASTM D3359-09, Test Method B.
Embodiment 42: An agent used for an automotive window, wherein the agent comprises an organic resin substrate and a multilayer coating system on a surface of the substrate, the multilayer coating system including an outermost plasma layer formed from polymerization of an organosilicon compound and an intermediate layer which is a UV cured coating of a coating composition, the intermediate layer (II) disposed between the plasma layer and the organic resin substrate; the wet coating comprises a multi-functional (meth)acrylate, a photopolymerization initiator, and a reactive UV absorber having the general formula (1): 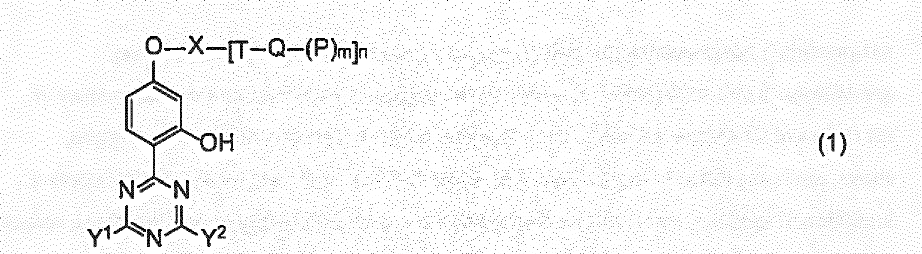 wherein Y¹ and Y² are each independently a substituent group of the general formula (2): 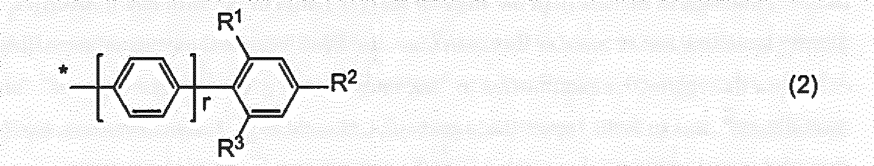 wherein * stands for a bonding site, r is 0 or 1, R¹, R² and R³ are each independently selected from the group consisting of hydrogen, hydroxyl, C₁-C₂₀ alkyl, C₄-C₁₂ cycloalkyl, C₂-C₂₀ alkenyl, C₁-C₂₀ alkoxy, C₄-C₁₂ cycloalkoxy, C₂-C₂₀ alkenyloxy, C₇-C₂₀ aralkyl, halogen, - C≡N, C₁-C₅ haloalkyl, -SO₂R', -SO₃H, -SO₃M (M = alkali metal), -COOR', -CONHR', - CONR'R", -OCOOR', -OCOR', -OCONHR', (meth)acrylamino, (meth)acryloxy, optionally substituted C₆-C₁₂ aryl and optionally substituted C₃-C₁₂ heteroaryl, wherein R' and R" are each independently hydrogen, C₁-C₂₀ alkyl, C₄-C₁₂ cycloalkyl, optionally substituted C₆-C₁₂ aryl or optionally substituted C₃-C₁₂ heteroaryl; X is a di-, tri- or tetravalent, linear or branched, saturated hydrocarbon residue which may be separated by at least one element of oxygen, nitrogen, sulfur, and phosphor; T is a urethane group -O-(C=O)-NH-; Q is a di- or trivalent, linear or branched, saturated hydrocarbon residue which may be separated by at least one element of oxygen, nitrogen, sulfur, and phosphor; P is (meth)acryloxy; and m is 1 or 2, and n is an integer of 1 to 3, with the proviso that m and n are not equal to 1 at the same time.

As used herein, the term "laminate" refers to a structure comprising a plurality of layers which are formed by appropriate processes. The processes include, for example, extrusion, co-extrusion, adhesive film, film insertion molding, wet coating, plasma deposition, lamination, and processes of arbitrary combination of the foregoing. The notation (Cₙ-Cₘ) means a group containing from n to m carbon atoms per group. UV refers to the ultraviolet region of the electromagnetic spectrum. Mw refers to a weight average molecular weight as measured by gel permeation chromatography (GPC) versus polystyrene standards. The terminology "(meth)acrylate" refers collectively to acrylate and methacrylate. All ranges disclosed herein are inclusive of the endpoints, and the endpoints are independently combinable with each other (e.g., ranges of "up to 25 wt%, or, more specifically, 5 wt% to 20 wt%", is inclusive of the endpoints and all intermediate values of the ranges of "5 wt% to 25 wt%," etc.). "Combination" is inclusive of blends, mixtures, alloys, reaction products, and the like. The terms "a," "an" and "the" herein do not denote a limitation of quantity, and are to be construed to cover both the singular and the plural, unless otherwise indicated herein or clearly contradicted by context. The suffix "(s)" as used herein is intended to include both the singular and the plural of the term that it modifies, thereby including one or more of that term (e.g., the film(s) can include one or more films). Reference throughout the specification to "one embodiment", "another embodiment", "an embodiment", and so forth, means that a particular element (e.g., feature, structure, and/or characteristic) described in connection with the embodiment is included in at least one embodiment described herein, and may or may not be present in other embodiments. In addition, it is to be understood that the described elements may be combined in any suitable manner in the various embodiments. Unless specifically specified otherwise, the date of the test standards set forth herein is the most recent date of the standard as of the date of the filing of this application.

## Claims

1. A method of making an organic resin laminate, comprising:
applying a wet coating to an organic resin substrate to form an intermediate layer (II) on the substrate, wherein the wet coating comprises a multi-functional (meth)acrylate, a photopolymerization initiator, and a reactive UV absorber having the general formula (1): 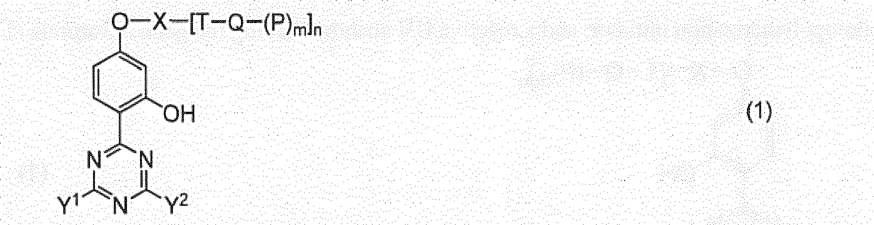 wherein Y¹ and Y² are each independently a substituent group of the general formula (2): 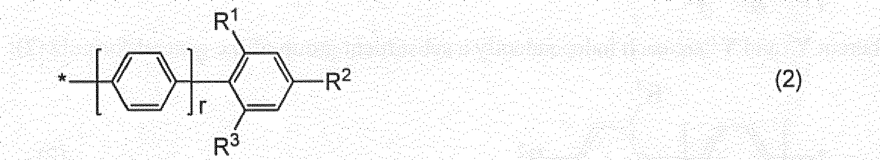 wherein * stands for a bonding site, r is 0 or 1, R¹, R² and R³ are each independently selected from the group consisting of hydrogen, hydroxyl, C₁-C₂₀ alkyl, C₄-C₁₂ cycloalkyl, C₂-C₂₀ alkenyl, C₁-C₂₀ alkoxy, C₄-C₁₂ cycloalkoxy, C₂-C₂₀ alkenyloxy, C₇-C₂₀ aralkyl, halogen, -C≡N, C₁-C₅ haloalkyl, -SO₂R', -SO₃H, -SO₃M (M = alkali metal), -COOR', -CONHR', -CONR'R", -OCOOR', -OCOR', -OCONHR', (meth)acrylamino, (meth)acryloxy, optionally substituted C₆-C₁₂ aryl and optionally substituted C₃-C₁₂ heteroaryl, wherein R' and R" are each independently hydrogen, C₁-C₂₀ alkyl, C₄-C₁₂ cycloalkyl, optionally substituted C₆-C₁₂ aryl or optionally substituted C₃-C₁₂ heteroaryl,
X is a di-, tri- or tetravalent, linear or branched, saturated hydrocarbon residue which may be separated by at least one element of oxygen, nitrogen, sulfur, and phosphor,
T is a urethane group -O-(C=O)-NH-,
Q is a di- or trivalent, linear or branched, saturated hydrocarbon residue which may be separated by at least one element of oxygen, nitrogen, sulfur, and phosphor,
P is (meth)acryloxy, and
m is 1 or 2, and n is an integer of 1 to 3, with the proviso that m and n are not equal to 1 at the same time;
UV curing the wet coating to form a cured coating; and
depositing a first plasma coating on the cured coating, wherein the first plasma coating is deposited using a first oxygen flow rate of less than 250 seem per plasma source.

2. A method of making an organic resin laminate, comprising:
applying a wet coating to an organic resin substrate to form an intermediate layer (II) on a substrate, wherein the wet coating comprises a multi-functional (meth)acrylate, a photopolymerization initiator, and a reactive UV absorber having the general formula (1): 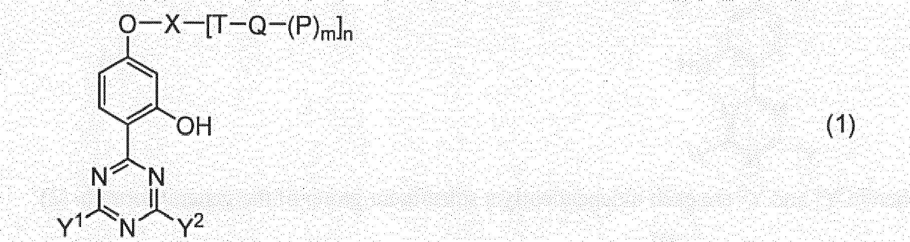 wherein Y¹ and Y² are each independently a substituent group of the general formula (2): 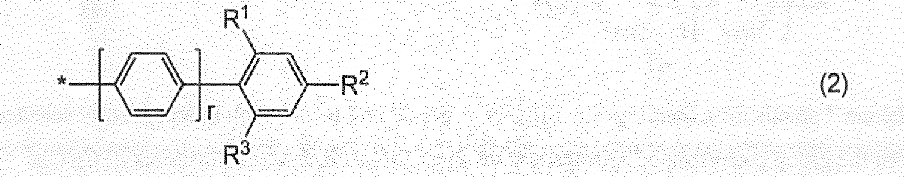 wherein * stands for a bonding site, r is 0 or 1, R¹, R² and R³ are each independently selected from the group consisting of hydrogen, hydroxyl, C₁-C₂₀ alkyl, C₄-C₁₂ cycloalkyl, C₂-C₂₀ alkenyl, C₁-C₂₀ alkoxy, C₄-C₁₂ cycloalkoxy, C₂-C₂₀ alkenyloxy, C₇-C₂₀ aralkyl, halogen, - C≡N, C₁-C₅ haloalkyl, -SO₂R', -SO₃H, -SO₃M (M = alkali metal), -COOR', -CONHR', - CONR'R", -OCOOR', -OCOR', -OCONHR', (meth)acrylamino, (meth)acryloxy, optionally substituted C₆-C₁₂ aryl and optionally substituted C₃-C₁₂ heteroaryl, wherein R' and R" are each independently hydrogen, C₁-C₂₀ alkyl, C₄-C₁₂ cycloalkyl, optionally substituted C₆-C₁₂ aryl or optionally substituted C₃-C₁₂ heteroaryl, X is a di-, tri- or tetravalent, linear or branched, saturated hydrocarbon residue which may be separated by at least one element of oxygen, nitrogen, sulfur, and phosphor, T is a urethane group -O-(C=O)-NH-, Q is a di- or trivalent, linear or branched, saturated hydrocarbon residue which may be separated by at least one element of oxygen, nitrogen, sulfur, and phosphor, P is (meth)acryloxy, and m is 1 or 2, and n is an integer of 1 to 3, with the proviso that m and n are not equal to 1 at the same time;
UV curing the wet coating to form a cured coating;
depositing a first plasma coating on the cured coating without an introduction of a molecular oxygen stream.

3. The method of any one of Claims 1 - 2, further comprising depositing a second plasma coating on the first plasma coating, wherein the second plasma coating and the first plasma coating form a plasma layer, and wherein the second plasma coating is deposited using a second oxygen flow rate of greater than or equal to 250 seem per plasma source.

4. The method of any one of Claims 1 - 3, wherein the first plasma coating is deposited using expanding thermal plasma deposition.

5. The method of any of Claims 1 - 4, further comprising flashing off solvent from the wet coating before the UV curing.

6. The method of any one of Claims 1 - 5, further comprising molding the substrate prior to applying the wet coating, wherein the organic resin substrate comprises polycarbonate, a blend comprising polycarbonate, or a copolymer comprising polycarbonate.

7. The organic resin laminate formed by the method of any of Claims 1 - 6.

8. The laminate of Claim 7, wherein X is a group having the general formula (3) or (4): 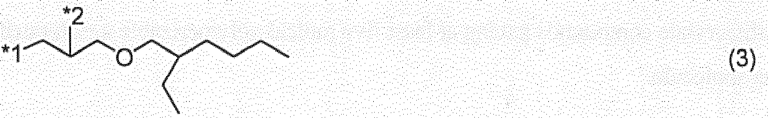 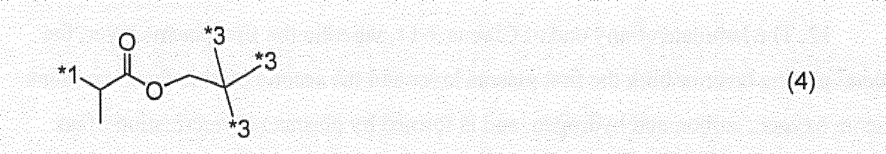 wherein *1 bonds to the oxygen in formula (1), *2 bonds to T in formula (1), *3 each independently is hydrogen or bonds to T in formula (1) directly or via a divalent, linear or branched, saturated hydrocarbon group which may be separated by at least one element of oxygen, nitrogen, sulfur, and phosphor, at least one *3 bonds to T directly or via a divalent, linear or branched, saturated hydrocarbon group which may be separated by at least one element of oxygen, nitrogen, sulfur, and phosphor, and Q is a group having the general formula (5) or (6): 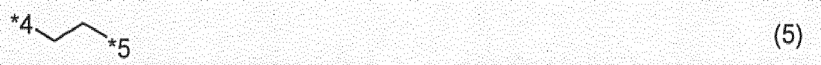 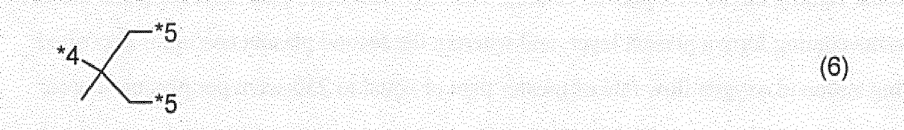 wherein *4 bonds to T in formula (1), and *5 bonds to P in formula (1).

9. The laminate of any of Claims -7-8, wherein in formula (1), R¹, R² and R³ are each independently hydrogen or methyl, X is a group of formula (3), Q is a group of formula (6), m is 2, and n is 1.

10. The laminate of any one of Claims 7-9, wherein the multi-functional (meth)acrylate (B) comprises a hydrolyzate and/or condensate of a (meth)acrylic functional alkoxysilane.

11. The laminate of any one of Claims 7-10, wherein the multi-functional (meth)acrylate (B) further comprises at least one member selected from the group consisting of dipentaerythritol penta(meth)acrylate, dipentaerythritol hexa(meth)acrylate, tris(2-(meth)acryloxyalkyl) isocyanurates, urethane poly(meth)acrylate compounds having at least five radical polymerizable unsaturated double bonds per molecule, and polyester poly(meth)acrylate compounds having at least five radical polymerizable unsaturated double bonds per molecule.

12. The laminate of any one of Claims 7-11, wherein the first plasma layer, the second plasma layer or both the first plasma layer and the second plasma layer, contains silicon, oxygen, carbon and hydrogen, and is formed by plasma polymerization of an organosilicon compound.

13. The laminate of any one of Claims 7-12, comprising the second plasma coating and wherein the plasma layer has a total thickness in the range of 2.5 to 5.0 µm.

## Patentansprüche

1. Verfahren zur Herstellung eines Organoharzlaminats, das Folgendes umfasst:
Aufbringen einer nassen Beschichtung auf ein Organoharzsubstrat zur Bildung einer Zwischenschicht (II) auf dem Substrat, wobei die nasse Beschichtung ein multifunktionelles (Meth)acrylat, einen Photopolymerisationsinitiator und einen reaktiven UV-Absorber mit der allgemeinen Formel (1) : 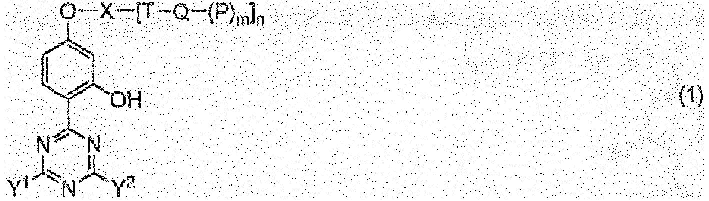 umfasst, wobei Y¹ und Y² jeweils unabhängig für eine Substituentengruppe der allgemeinen Formel (2) : 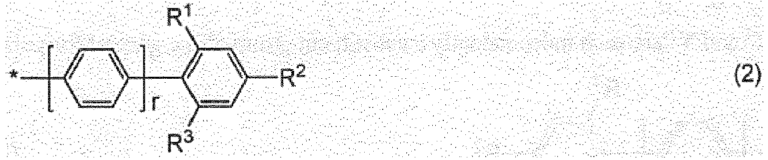 stehen, wobei * für eine Bindungsstelle steht, r für 0 oder 1 steht, R¹, R² und R³ jeweils unabhängig aus der Gruppe bestehend aus Wasserstoff, Hydroxyl, C₁-C₂₀-Alkyl, C₄-C₁₂-Cycloalkyl, C₂-C₂₀-Alkenyl, C₁-C₂₀-Alkoxy, C₄-C₁₂-Cycloalkyloxy, C₂-C₂₀-Alkenyloxy, C₇-C₂₀-Aralkyl, Halogen, -C≡N, C₁-C₅-Halogenalkyl, -SO₂R', -SO₃H, -SO₃M (M = Alkalimetall), -COOR', -CONHR', -CONR'R'', -OCOOR', -OCOR', -OCONHR', (Meth)acrylamino, (Meth)acryloxy, gegebenenfalls substituiertem C₆-C₁₂-Aryl und gegebenenfalls substituiertem C₃-C₁₂-Heteroaryl ausgewählt sind, wobei R' und R'' jeweils unabhängig für Wasserstoff, C₁-C₂₀-Alkyl, C₄-C₁₂-Cycloalkyl, gegebenenfalls substituiertes C₆-C₁₂-Aryl und gegebenenfalls substituiertes C₃-C₁₂-Heteroaryl stehen,
X für einen zwei-, drei- oder vierwertigen, linearen oder verzweigten, gesättigten Kohlenwasserstoffrest, der durch mindestens ein Element von Sauerstoff, Stickstoff, Schwefel und Phosphor getrennt sein kann, steht,
T für eine Urethangruppe -O-(C=O)-NH- steht,
Q für einen zwei- oder dreiwertigen, linearen oder verzweigten, gesättigten Kohlenwasserstoffrest, der durch mindestens ein Element von Sauerstoff, Stickstoff, Schwefel und Phosphor getrennt sein kann, steht,
P für (Meth)acryloxy steht und
m für 1 oder 2 steht und n für eine ganze Zahl von 1 bis 3 steht, mit der Maßgabe, dass m und n nicht gleichzeitig gleich 1 sind;
UV-Härten der nassen Beschichtung zur Bildung einer gehärteten Beschichtung; und
Abscheiden einer ersten Plasmabeschichtung auf der gehärteten Beschichtung, wobei die erste Plasmabeschichtung unter Verwendung einer Sauerstoff-Strömungsrate von weniger als 250 sccm pro Plasmaquelle abgeschieden wird.

2. Verfahren zur Herstellung eines Organoharzlaminats, das Folgendes umfasst:
Aufbringen einer nassen Beschichtung auf ein Organoharzsubstrat zur Bildung einer Zwischenschicht (II) auf dem Substrat, wobei die nasse Beschichtung ein multifunktionelles (Meth)acrylat, einen Photopolymerisationsinitiator und einen reaktiven UV-Absorber mit der allgemeinen Formel (1) : 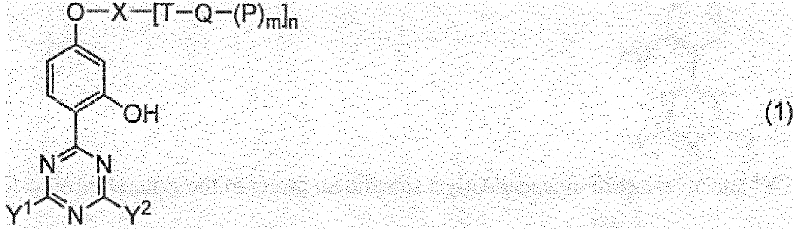 umfasst, wobei Y¹ und Y² jeweils unabhängig für eine Substituentengruppe der allgemeinen Formel (2) : 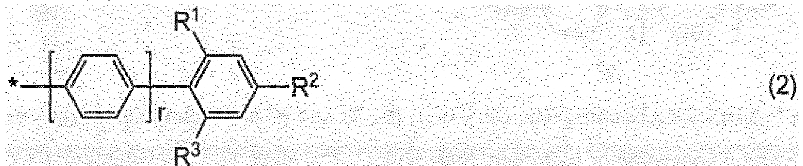 stehen, wobei * für eine Bindungsstelle steht, r für 0 oder 1 steht, R¹, R² und R³ jeweils unabhängig aus der Gruppe bestehend aus Wasserstoff, Hydroxyl, C₁-C₂₀-Alkyl, C₄-C₁₂-Cycloalkyl, C₂-C₂₀-Alkenyl, C₁-C₂₀-Alkoxy, C₄-C₁₂-Cycloalkyloxy, C₂-C₂₀-Alkenyloxy, C₇-C₂₀-Aralkyl, Halogen, -C≡N, C₁-C₅-Halogenalkyl, -SO₂R', -SO₃H, -SO₃M (M = Alkalimetall), -COOR', -CONHR', -CONR'R'', -OCOOR', -OCOR', -OCONHR', (Meth)acrylamino, (Meth)acryloxy, gegebenenfalls substituiertem C₆-C₁₂-Aryl und gegebenenfalls substituiertem C₃-C₁₂-Heteroaryl ausgewählt sind, wobei R' und R'' jeweils unabhängig für Wasserstoff, C₁-C₂₀-Alkyl, C₄-C₁₂-Cycloalkyl, gegebenenfalls substituiertes C₆-C₁₂-Aryl und gegebenenfalls substituiertes C₃-C₁₂-Heteroaryl stehen, X für einen zwei-, drei- oder vierwertigen, linearen oder verzweigten, gesättigten Kohlenwasserstoffrest, der durch mindestens ein Element von Sauerstoff, Stickstoff, Schwefel und Phosphor getrennt sein kann, steht, T für eine Urethangruppe -O-(C=O)-NH- steht, Q für einen zwei- oder dreiwertigen, linearen oder verzweigten, gesättigten Kohlenwasserstoffrest, der durch mindestens ein Element von Sauerstoff, Stickstoff, Schwefel und Phosphor getrennt sein kann, steht, P für (Meth)acryloxy steht und m für 1 oder 2 steht und n für eine ganze Zahl von 1 bis 3 steht, mit der Maßgabe, dass m und n nicht gleichzeitig gleich 1 sind;
UV-Härten der nassen Beschichtung zur Bildung einer gehärteten Beschichtung; und
Abscheiden einer ersten Plasmabeschichtung auf der gehärteten Beschichtung ohne Eintrag eines Stromes von molekularem Sauerstoff.

3. Verfahren nach einem der Ansprüche 1-2, ferner umfassend das Abscheiden einer zweiten Plasmabeschichtung auf der ersten Plasmabeschichtung, wobei die zweite Plasmabeschichtung und die erste Plasmabeschichtung eine Plasmaschicht bilden und wobei die zweite Plasmabeschichtung unter Verwendung einer Sauerstoff-Strömungsrate größer oder gleich 250 sccm pro Plasmaquelle abgeschieden wird.

4. Verfahren nach einem der Ansprüche 1-3, wobei die erste Plasmabeschichtung unter Verwendung von expandierender thermischer Plasmabeschichtung abgeschieden wird.

5. Verfahren nach einem der Ansprüche 1-4, ferner umfassend das Abflashen von Lösungsmitteln von der nassen Beschichtung vor der UV-Härtung.

6. Verfahren nach einem der Ansprüche 1-5, ferner umfassend das Formen des Substrats vor dem Aufbringen der nassen Beschichtung, wobei das Organoharzsubstrat Polycarbonat, eine Mischung, die Polycarbonat umfasst, oder ein Copolymer, das Polycarbonat umfasst, umfasst.

7. Organoharzlaminat, gebildet durch das Verfahren nach einem der Ansprüche 1-6.

8. Laminat nach Anspruch 7, wobei X für eine Gruppe mit der allgemeinen Formel (3) oder (4): 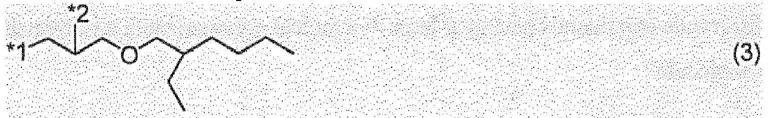 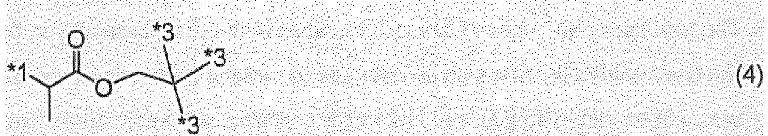 steht, wobei *1 an den Sauerstoff in Formel (1) bindet, *2 an T in Formel (1) bindet, *3 jeweils unabhängig für Wasserstoff oder Bindungen an T in Formel (1) direkt oder über eine zweiwertige, lineare oder verzweigte, gesättigte Kohlenwasserstoffgruppe, die durch mindestens ein Element von Sauerstoff, Stickstoff, Schwefel und Phosphor getrennt sein kann, steht und mindestens ein *3 direkt oder über eine zweiwertige, lineare oder verzweigte, gesättigte Kohlenwasserstoffgruppe, die durch mindestens ein Element von Sauerstoff, Stickstoff, Schwefel und Phosphor getrennt sein kann, an T bindet, und Q für eine Gruppe mit der allgemeinen Formel (5) oder (6): 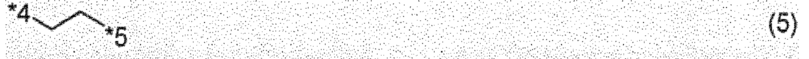 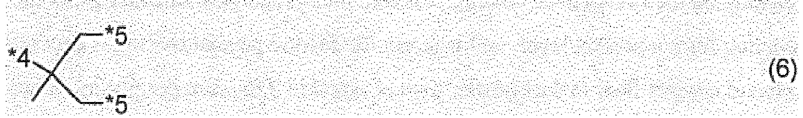 steht, wobei *4 an T in Formel (1) bindet und *5 an P in Formel (1) bindet.

9. Laminat nach einem der Ansprüche 7-8, wobei in Formel (1) R¹, R² und R³ jeweils unabhängig für Wasserstoff oder Methyl stehen, X für eine Gruppe der Formel (3) steht, Q für eine Gruppe der Formel (6) steht, m für 2 steht und n für 1 steht.

10. Laminat nach einem der Ansprüche 7-9, wobei das multifunktionelle (Meth)acrylat (B) ein Hydrolysat und/oder Kondensat eines (meth)acrylfunktionellen Alkoxysilans umfasst.

11. Laminat nach einem der Ansprüche 7-10, wobei das multifunktionelle (Meth)acrylat (B) ferner mindestens ein Mitglied aus der Gruppe bestehend aus Dipentaerythritolpenta(meth)acrylat, Dipentaerythritolhexa(meth)acrylat, Tris(2-(meth)acryloxyalkyl)isocyanuraten, Urethanpoly(meth)acrylatverbindungen mit mindestens fünf radikalisch polymerisierbaren ungesättigten Doppelbindungen pro Molekül und Polyesterpoly(meth)acrylatverbindungen mit mindestens fünf radikalisch polymerisierbaren ungesättigten Doppelbindungen pro Molekül umfasst.

12. Laminat nach einem der Ansprüche 7-11, wobei die erste Plasmaschicht, die zweite Plasmaschicht oder sowohl die erste Plasmaschicht als auch die zweite Plasmaschicht Silicium, Sauerstoff, Kohlenstoff und Wasserstoff enthält und durch Plasmapolymerisation einer Organosiliciumverbindung gebildet wird.

13. Laminat nach einem der Ansprüche 7-12, das die zweite Plasmabeschichtung umfasst, wobei die Plasmaschicht eine Gesamtdicke im Bereich von 2,5 bis 5,0 µm aufweist.

## Revendications

1. Procédé de fabrication d'un stratifié de résine organique, comprenant :
l'application d'un revêtement humide sur un substrat en résine organique pour former une couche intermédiaire (II) sur le substrat, le revêtement humide comprenant un (méth)acrylate multifonctionnel, un initiateur de photopolymérisation et un absorbeur d'UV réactif répondant à la formule générale (1) : 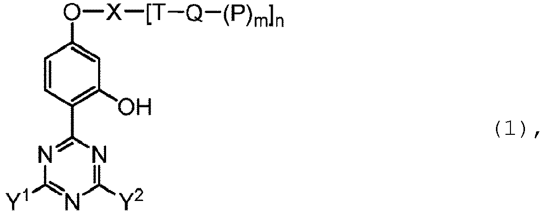 dans laquelle
Y¹ et Y² sont chacun indépendamment un groupe substituant représenté par la formule générale (2) : 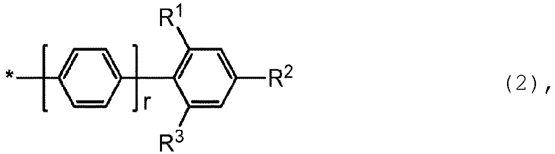 dans laquelle
* désigne un site de liaison,
r vaut 0 ou 1,
R¹, R² et R³ sont chacun indépendamment choisis dans le groupe constitué par l'atome d'hydrogène et les groupes hydroxyle, alkyle en C₁-C₂₀, cycloalkyle en C₄-C₁₂, alcényle en C₂-C₂₀, alcoxy en C₁-C₂₀, cycloalkyloxy en C₄-C₁₂, alcényloxy en C₂-C₂₀, aralkyle en C₇-C₂₀, halogéno, -C≡N, halogénoalkyle en C₁-C₅, -SO₂R', -SO₃H, -SO₃M (M = un métal alcalin), -COOR', -CONHR', -CONR'R", -OCOOR', -OCOR', -OCONHR', (méth)acrylamino, (méth)acryloxy, aryle en C₆-C₁₂ éventuellement substitué et hétéroaryle en C₃-C₁₂ éventuellement substitué, R' et R" étant chacun indépendamment l'atome d'hydrogène ou un groupe alkyle en C₁-C₂₀, cycloalkyle en C₄-C₁₂, aryle en C₆-C₁₂ éventuellement substitué ou hétéroaryle en C₃-C₁₂ éventuellement substitué,
X est un résidu divalent, trivalent ou tétravalent d'hydrocarbure saturé linéaire ou ramifié qui peut être séparé par au moins un élément parmi l'oxygène, l'azote, le soufre et le phosphore,
T est un groupe uréthane -O-(C=O)-NH-,
Q est un résidu divalent ou trivalent d'hydrocarbure saturé linéaire ou ramifié qui peut être séparé par au moins un élément parmi l'oxygène, l'azote, le soufre et le phosphore,
P est un groupe (méth)acryloxy et
m vaut 1 ou 2 et
n est un nombre entier de 1 à 3, à condition que m et n ne soient pas égaux à 1 en même temps ;
le durcissement UV du revêtement humide pour former un revêtement durci ; et
le dépôt d'un premier revêtement formé par plasma sur le revêtement durci, le premier revêtement formé par plasma étant déposé à l'aide d'un premier débit d'oxygène inférieur à 250 cm³ std/min par source de plasma.

2. Procédé de fabrication d'un stratifié de résine organique, comprenant :
l'application d'un revêtement humide sur un substrat en résine organique pour former une couche intermédiaire (II) sur le substrat, le revêtement humide comprenant un (méth)acrylate multifonctionnel, un initiateur de photopolymérisation et un absorbeur d'UV réactif répondant à la formule générale (1) : 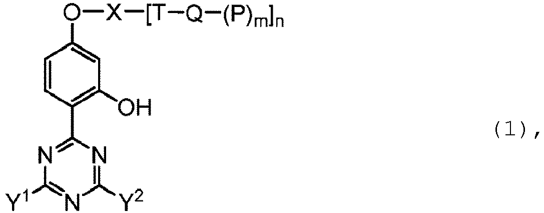 dans laquelle
Y¹ et Y² sont chacun indépendamment un groupe substituant représenté par la formule générale (2) : 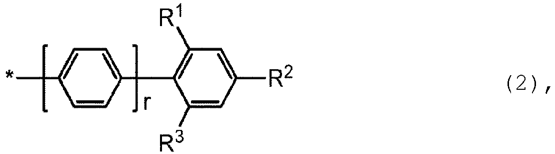 dans laquelle
* désigne un site de liaison,
r vaut 0 ou 1,
R¹, R² et R³ sont chacun indépendamment choisis dans le groupe constitué par l'atome d'hydrogène et les groupes hydroxyle, alkyle en C₁-C₂₀, cycloalkyle en C₄-C₁₂, alcényle en C₂-C₂₀, alcoxy en C₁-C₂₀, cycloalkyloxy en C₄-C₁₂, alcényloxy en C₂-C₂₀, aralkyle en C₇-C₂₀, halogéno, -C≡N, halogénoalkyle en C₁-C₅, -SO₂R', -SO₃H, -SO₃M (M = un métal alcalin), -COOR', -CONHR', -CONR'R", -OCOOR', -OCOR', -OCONHR', (méth)acrylamino, (méth)acryloxy, aryle en C₆-C₁₂ éventuellement substitué et hétéroaryle en C₃-C₁₂ éventuellement substitué, R' et R" étant chacun indépendamment l'atome d'hydrogène ou un groupe alkyle en C₁-C₂₀, cycloalkyle en C₄-C₁₂, aryle en C₆-C₁₂ éventuellement substitué ou hétéroaryle en C₃-C₁₂ éventuellement substitué,
X est un résidu divalent, trivalent ou tétravalent d'hydrocarbure saturé linéaire ou ramifié qui peut être séparé par au moins un élément parmi l'oxygène, l'azote, le soufre et le phosphore,
T est un groupe uréthane -O-(C=O)-NH-,
Q est un résidu divalent ou trivalent d'hydrocarbure saturé linéaire ou ramifié qui peut être séparé par au moins un élément parmi l'oxygène, l'azote, le soufre et le phosphore,
P est un groupe (méth)acryloxy et
m vaut 1 ou 2 et
n est un nombre entier de 1 à 3, à condition que m et n ne soient pas égaux à 1 en même temps ;
le durcissement UV du revêtement humide pour former un revêtement durci ;
le dépôt d'un premier revêtement formé par plasma sur le revêtement durci sans introduction d'un flux d'oxygène moléculaire.

3. Procédé selon l'une quelconque des revendications 1-2, comprenant en outre le dépôt d'un second revêtement formé par plasma sur le premier revêtement formé par plasma, le second revêtement formé par plasma et le premier revêtement formé par plasma formant une couche formée par plasma et le second revêtement formé par plasma étant déposé à l'aide d'un second débit d'oxygène supérieur ou égal à 250 cm³ std/min par source de plasma.

4. Procédé selon l'une quelconque des revendications 1-3, dans lequel le premier revêtement formé par plasma est déposé à l'aide d'un dépôt par plasma thermique en expansion.

5. Procédé selon l'une quelconque des revendications 1-4, comprenant en outre l'élimination du solvant du revêtement humide par évaporation éclair avant le durcissement UV.

6. Procédé selon l'une quelconque des revendications 1-5, comprenant en outre le moulage du substrat avant l'application du revêtement humide, le substrat en résine organique comprenant du polycarbonate, un mélange comprenant du polycarbonate ou un copolymère comprenant du polycarbonate.

7. Stratifié de résine organique formé par le procédé selon l'une quelconque des revendications 1-6.

8. Stratifié selon la revendication 7, dans lequel X est un groupe répondant à la formule générale (3) ou (4) : 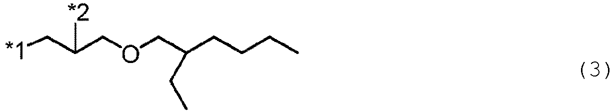 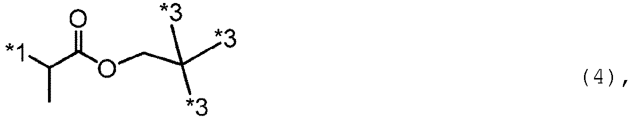 dans lesquelles
*1 est lié à l'atome d'oxygène de la formule (1),
*2 est lié à T de la formule (1),
les *3 représentent chacun indépendamment l'atome d'hydrogène ou sont chacun liés à T de la formule (1) directement ou par l'intermédiaire d'un groupe hydrocarboné divalent saturé linéaire ou ramifié qui peut être séparé par au moins un élément parmi l'oxygène, l'azote, le soufre et le phosphore, au moins un *3 étant lié à T directement ou par l'intermédiaire d'un groupe hydrocarboné divalent saturé linéaire ou ramifié qui peut être séparé par au moins un élément parmi l'oxygène, l'azote, le soufre et le phosphore, et
Q est un groupe répondant à la formule générale (5) ou (6) : 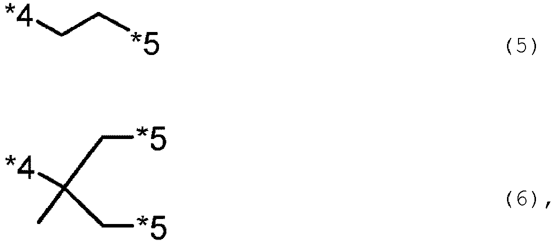 dans lesquelles
*4 est lié à T de la formule (1) et
*5 est lié à P de la formule (1).

9. Stratifié selon l'une quelconque des revendications 7-8, dans lequel dans la formule (1), R¹, R² et R³ sont chacun indépendamment l'atome d'hydrogène ou un groupe méthyle, X est un groupe de formule (3), Q est un groupe de formule (6), m vaut 2 et n vaut 1.

10. Stratifié selon l'une quelconque des revendications 7-9, dans lequel le (méth)acrylate multifonctionnel (B) comprend un produit d'hydrolyse et/ou un produit de condensation d'un alcoxysilane à fonction (méth)acrylique.

11. Stratifié selon l'une quelconque des revendications 7-10, dans lequel le (méth)acrylate multifonctionnel (B) comprend en outre au moins un élément choisi dans le groupe constitué par le penta(méth)acrylate de dipentaérythritol, l'hexa(méth)acrylate de dipentaérythritol, les isocyanurates de tris(2-(méth)acryloxyalkyle), les composés uréthane-poly(méth)acrylates ayant au moins cinq doubles liaisons insaturées polymérisables par voie radicalaire par molécule et les composés polyester-poly(méth)acrylates ayant au moins cinq doubles liaisons insaturées polymérisables par voie radicalaire par molécule.

12. Stratifié selon l'une quelconque des revendications 7-11, dans lequel la première couche formée par plasma, la seconde couche formée par plasma ou à la fois la première couche formée par plasma et la seconde couche formée par plasma contiennent du silicium, de l'oxygène, du carbone et de l'hydrogène et sont formées par polymérisation par plasma d'un composé d'organosilicium.

13. Stratifié selon l'une quelconque des revendications 7-12, comprenant le second revêtement formé par plasma et dans lequel la couche formée par plasma a une épaisseur totale dans la plage de 2,5 à 5,0 µm.
